# EUROPEAN PATENT APPLICATION

(11) **EP 2 045 119 A2**
(43) Date of publication of application: **08.04.2009**
(21) Application number: 08165647.2
(22) Date of filing: 01.10.2008
(51) Int. Cl.: B60N 2/12

(54) **Driving posture adjusting apparatus**

(30) Priority: 02.10.2007 JP 2007258881; 02.10.2007 JP 2007258882
(71) Applicant: Mazda Motor Corporation, Fuchu-cho Aki-gun Hiroshima, Hiroshima 730-8670 (JP)
(72) Inventor: Ohtsubo, Tomonori, Hiroshima Hiroshima 730-8670 (JP); Uemura, Hiroki, Hiroshima 730-8670 (JP); Takeda, Yusaku, Hiroshima 730-8670 (JP); Iwamoto, Asami, Hiroshima 730-8670 (JP); Yamasaki, Hirokazu, Hiroshima 730-8670 (JP); Maeda, Toshikazu, Hiroshima 730-8670 (JP)
(74) Representative: Thoma, Michael

(57) **Abstract**

Disclosed is a driving posture adjusting apparatus comprising: a seat-position adjusting mechanism (2) adapted to move a seat cushion (1a) of a driver seat (1) in a longitudinal direction so as to adjust a longitudinal position of the driver seat (1); a seated-posture adjusting mechanism (3) adapted to adjust a seated posture of a driver seated in the driver seat (1); a controllability adjusting mechanism (7) adapted to adjust controllability for an operation section (4) to be operated by the driver; a seat slide switch (91) adapted to issue an instruction for actuating the seat-position adjusting mechanism (2) to move the seat cushion (1a) of the driver seat (1) in the longitudinal direction; and control unit (95) operable to actuate the seated-posture adjusting mechanism (3) and the controllability adjusting mechanism (7), in correlation with the longitudinal position of the driver seat (1) adjusted according to an input signal through the seat slide switch (91), so as to obtain a driving posture corresponding to a predetermined recommended position. The driving posture adjusting apparatus of the present invention can adjust a driving posture of a driver seated in a driver seat, in an easy and proper manner.

## Description

### BACKGROUND OF THE INVENTION

### 1. Field of the Invention

The present invention relates to a driving position adjusting apparatus for a vehicle, which is adapted to be capable of adjusting a driving position of a driver seated in a driver seat.

### 2. Description of the Background Art

Heretofore, seated conditions, such as seated position and seated posture, of a driver seated in a driver seat of a vehicle have been adjusted to be suitable for driving operations, in such a manner that, before sitting on a driver seat, a driver operates a switch to move the driver seat to a predetermined standard position (e.g., an intermediate position of a movable range in a frontward-rearward (i.e., longitudinal) direction of a vehicle body), and then after sitting on the driver seat, the driver operates various switches to sequentially adjust a longitudinal position of the driver seat, a reclining angle of a seat back of the driver seat, and an upward-downward (i.e., vertical) position of a seat cushion of the driver seat, as shown, for example, in JP 10-512214A.

In a vehicle component position adjusting system disclosed in the JP 10-512214A, for example, when a body height of a driver seated in the driver seat is less than a standard body height, the driver seat can be moved frontwardly relative to the standard position to adjust the longitudinal position of the driver seat in conformity to a body size (e.g., leg length) of the driver so as to allow the driver to properly operate an operation pedal, such as an accelerator pedal, arranged in front of the driver seat. Then, the reclining angle of the seat back can be adjusted to make the driver's seated posture comfortable, and the vertical position of the seat cushion can be adjusted to properly ensure forward visibility.

However, if the reclining angle of the seat back and the vertical position of the seat cushion are adjusted after the adjustment of the longitudinal position of the driver seat, the seated posture of the driver seated in the driver seat is changed, which is likely to cause a problem about deterioration in controllability for (or accessibility to) the operation pedal, and raise a consequent need for re-adjusting the longitudinal position of the driver seat to ensure the controllability for the operation pedal. Moreover, the re-adjustment of the longitudinal position of the driver seat is likely to cause a problem about deteriorations in seated comfort due to deviation between the seated posture and a proper state and in forward visibility due to deviation between the driver's eye point and a proper line, and raise a consequent need for re-adjusting the reclining angle of the seat back and the vertical position of the seat cushion.

### SUMMARY OF THE INVENTION

In view of the above circumstances, it is an object of the present invention to provide a driving posture adjusting apparatus for a vehicle, which is capable of adjusting a driving posture of a driver seated in a driver seat, in an easy and proper manner.

In order to achieve this object, the present invention provides a driving posture adjusting apparatus for a vehicle, comprising: a seat-position adjusting mechanism adapted to move a seat cushion of a driver seat in a longitudinal direction of a vehicle body so as to adjust a longitudinal position of the driver seat; a seated-posture adjusting mechanism adapted to adjust a seated posture of a driver seated in the driver seat; a controllability adjusting mechanism adapted to adjust controllability for an operation section to be operated by the driver; a seat slide switch adapted to issue an instruction for actuating the seat-position adjusting mechanism to move the seat cushion of the driver seat in the longitudinal direction; and control unit operable to actuate the seated-posture adjusting mechanism and the controllability adjusting mechanism, in correlation with the longitudinal position of the driver seat adjusted according to an input signal through the seat slide switch, so as to obtain a driving posture corresponding to a predetermined recommended position.

### BRIEF DESCRIPTION OF THE DRAWINGS

FIG. 1 is an explanatory diagram showing a driving posture adjusting apparatus according to a first embodiment of the present invention.
FIG. 2 is a perspective view showing a specific structure of a floor lifting/lowering mechanism.
FIG. 3 is an exploded perspective view showing a specific structure of a movable floor unit.
FIG. 4 is a sectional side view showing the specific structure of the floor lifting/lowering mechanism.
FIG. 5 is an exploded perspective view showing a specific structure of a winding mechanism.
FIG. 6 is a sectional view taken along the line VI-VI in FIG. 4.
FIG. 7 is a sectional side view showing the specific structure of the floor lifting/lowering mechanism, corresponding to FIG. 4, wherein the movable floor unit is set in a lowered position.
FIG. 8 is a side view showing a specific structure of a seat-position adjusting mechanism.
FIG. 9 is a perspective view showing the specific structure of the seat-position adjusting mechanism.
FIG. 10 is a sectional view taken along the line X-X in FIG. 8.
FIG. 11 is a sectional side view showing a specific structure of a seat-cushion lifting/lowering drive unit.
FIG. 12 is a sectional top plan view showing the specific structure of the seat-cushion lifting/lowering drive unit.
FIG. 13 is a side view showing the specific structure of the seat-position adjusting mechanism, corresponding to FIG. 8, wherein a seat cushion is moved to a frontmost position.
FIG. 14 is a sectional side view showing a specific structure of the winding mechanism and associated components.
FIG. 15 is an exploded perspective view showing the specific structure of the winding mechanism and associated components.
FIG. 16 is a sectional view taken along the line XVI-XVI in FIG. 14.
FIG. 17 is a block diagram showing a configuration of a control section of a driving posture adjusting apparatus according to one embodiment of the present invention.
FIG. 18 is an exploded perspective view showing a specific structure of a switch unit.
FIG. 19 is a sectional view showing the specific structure of the switch unit.
FIG. 20 is a flowchart showing a control routine in the control section.
FIG. 21 is a graph showing a recommended position line for executing the control routine in the control section.
FIG. 22 is a graph showing one example of a control operation in the control section.
FIG. 23 is a graph showing another example of the control operation in the control section.
FIG. 24 is an explanatory diagram showing a specific example of an installation location of the switch unit.
FIG. 25 is an explanatory diagram showing a structure of a switch unit for use in a driving posture adjusting apparatus according to a second embodiment of the present invention.
FIG. 26 is an explanatory diagram showing a structure of a switch unit for use in a driving posture adjusting apparatus according to a third embodiment of the present invention.
FIG. 27 is an explanatory diagram showing a structure of a switch unit for use in a driving posture adjusting apparatus according to a fourth embodiment of the present invention.
FIG. 28 is a graph showing a drive characteristic of the movable floor unit and drive characteristic of associated components.
FIG. 29 is an explanatory diagram showing a state when an average-height driver is seated in a driver seat.
FIG. 30 is an explanatory diagram showing a state when a tall driver is seated in a driver seat.
FIG. 31 is an explanatory diagram showing a lift amount of the movable floor unit.
FIG. 32 is an explanatory diagram showing a lowering amount of the movable floor unit.
FIG. 33 is an explanatory diagram showing a seated posture of a short driver.
FIG. 34 is an explanatory diagram showing a seated posture of a tall driver.

### DESCRIPTION OF THE PREFERRED EMBODIMENTS

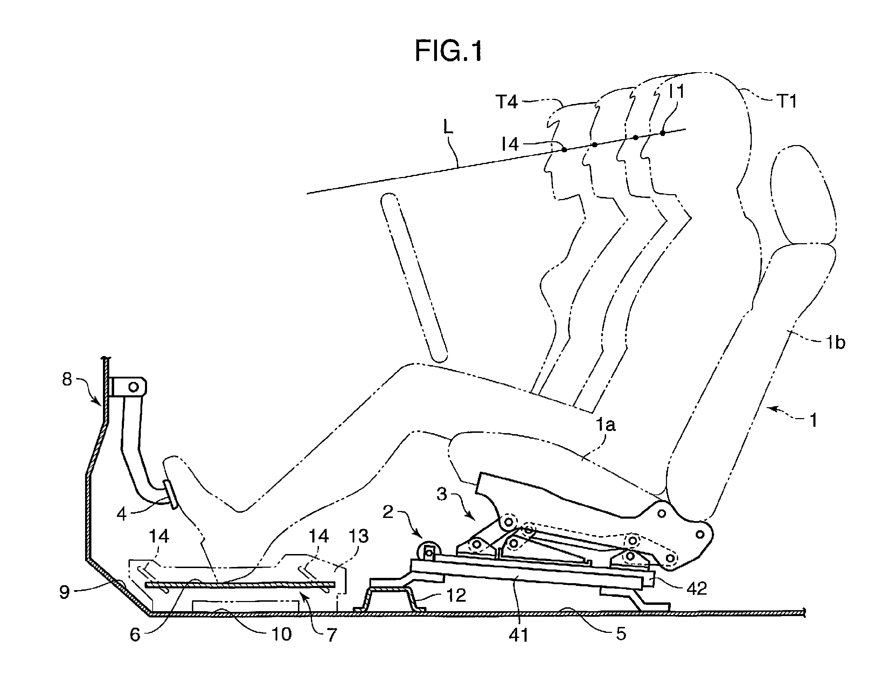

FIG. 1 shows a driving posture adjusting apparatus for a vehicle, according to a first embodiment of the present invention. This driving posture adjusting apparatus comprises a seat-position adjusting mechanism 2 adapted to move a seat cushion 1a of a driver seat 1 in a frontward-rearward (i.e., longitudinal) direction of a vehicle body so as to adjust a longitudinal position of the driver seat 1, a seated-posture adjusting mechanism 3 adapted to adjust a seated posture of a driver seated in the driver seat 1, and a controllability adjusting mechanism comprising a floor lifting/lowering mechanism 7 adapted to selectively drivingly lift and lower a movable floor unit 6 located under feet of the driver seated in the driver seat 1 in such a manner as to cover an upper surface of a floor panel 5 of the vehicle body. More specifically, the movable floor unit 6 is adapted to allow heels of feet of a driver seated in the driver seat 1 to be placed thereon when the driver presses an operation pedal 4, such as an accelerator pedal or a brake pedal, and the floor lifting/lowering mechanism 7 is adapted to adjust an upward-downward (i.e., vertical) position of the movable floor unit 6 so as to adjust controllability for the operation pedal 4.

The floor panel 5 includes a kick-up portion 9 extending rearwardly and obliquely downwardly from a lower edge of a dash panel 8 separating between an engine compartment and a passenger compartment, and a generally flat floor base portion 10 extending continuously and rearwardly from a rear edge of the kick-up portion 9. The floor panel 5 has an upper surface provided with a conventional floor trim material (not shown) which comprises an insulator having sound and heat insulation functions, such as felt insulator or glass wool insulator, and a surface layer made of a carpet material or the like and formed to cover an upper surface of the insulator.

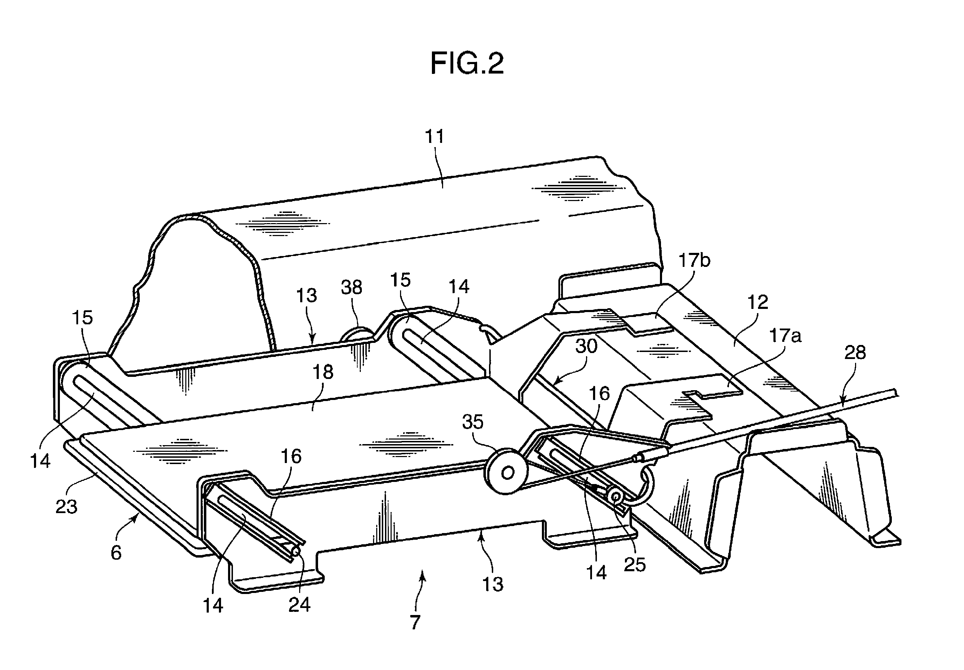

As shown in FIG. 2, the floor panel 5 further includes a floor tunnel portion 11 formed in a central region thereof to extend in a longitudinal direction of the vehicle body. The floor base portion 10 has a specific zone surrounded by the floor tunnel portion 11, one of a pair of side sills (not shown) each extending in the longitudinal direction along a respective one of opposed longitudinal side edges of the floor panel 5, a cross member 12 extending in a widthwise (i.e., lateral) direction of the vehicle body to support a front end of the driver seat 1, and the kick-up portion 9 of the floor panel 5. The floor lifting/lowering mechanism 7 includes a pair of first and second floor support members 13 mounted on respective lateral edges of the specific zone of the floor base portion 10 to support right and left sides of the movable floor unit 6.

Each of the floor support members 13 has an upstanding wall which extends approximately vertically upwardly from a respective one of the lateral edges of the specific zone of the floor base portion 10, and has front and rear ends formed with respective ones of a pair of front and rear guide grooves 14 extending frontwardly and obliquely upwardly at the same angle, for example, at an angle corresponding to an inclination angle of the kick-up portion 9. The upstanding wall of the floor support member 13 has a laterally inner surface mounting thereon a pair of reinforcing plates 15 each formed with a cutout corresponding to a respective one of the front and rear guide grooves 14, and a laterally outer surface mounting thereon a pair of guide members 16 each comprised of a sectionally angular C-shaped channel member having a bottom wall formed with a cutout corresponding to a respective one of the front and rear guide grooves 14. Each of the floor support members 13 has a retaining bracket 17a, 17b integrally formed therewith to extend rearwardly from a rear edge thereof and have a configuration capable of being fixed, for example, to an upper surface of the cross member 12.

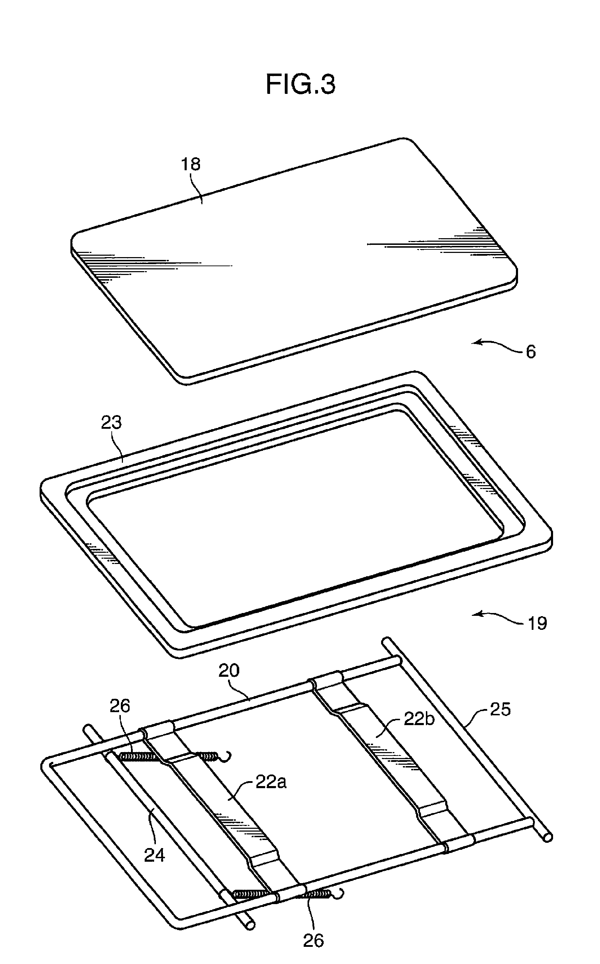

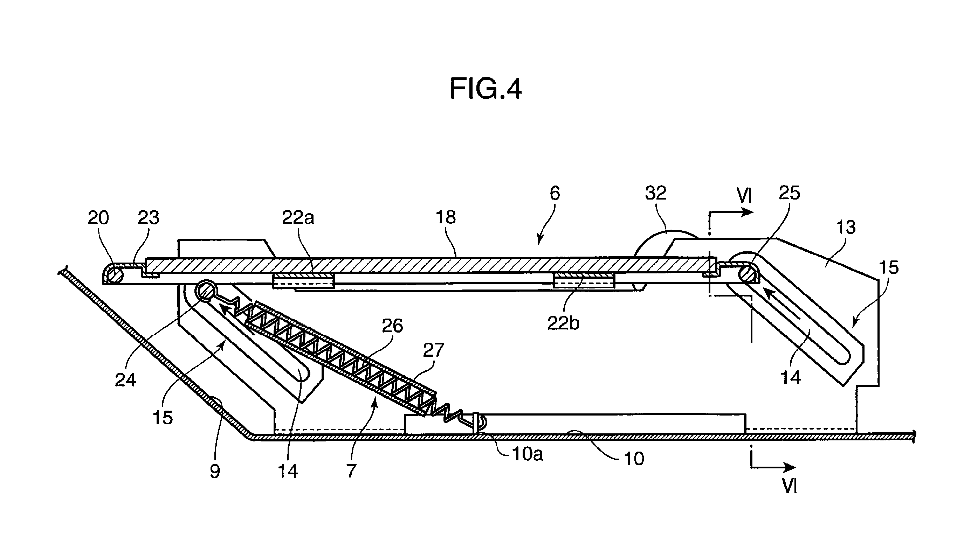

As shown in FIGS. 3 and 4, the movable floor unit 6 comprises a flat plate-shaped board member 18 providing a loading surface for placing thereon heels of a driver seated in the driver seat 1, and a base member 19 for supporting the board member 18 in a liftable and lowerable manner. The base member 19 includes a rim segment 20 formed by bending a rod-like member into an angular C shape, front and rear connection segments 22a, 22b each formed of a plate-shaped member connecting opposite lateral sides of the rim segment 20, and an outer frame segment 23 fixedly mounted on the rim segment 20. The board member 18 is placed on the outer frame segment 23 and the connection segments 22a, 22b, and fixedly fastened together by screw clamping or other fastening means.

The rim segment 20 is provided with first and second slide shafts 24, 25. The first slide shaft 24 is fixed to lower surfaces of respective front regions of the lateral sides thereof by welding or other fixing means to extend laterally, and the second slide shaft 25 is interconnectingly fixed to respective rear edges thereof by welding or other fixing means to extend laterally. Each of the slide shafts 24, 25 is formed and arranged to have opposite lateral ends protruding laterally from the rim member 20, wherein the protruding lateral ends of the first slide shaft 24, and the protruding lateral ends of the second slide shaft 25, are insertedly supported, respectively, by the opposed front guide grooves 14 and the opposed rear guide grooves 14 of the first and second floor support members 13 in a slidable manner.

The first slide shaft 24 located on a frontward side relative to the second slide shaft 25 is associated with biasing means 26, such as two tension springs. Specifically, the biasing means 26 has a front end attached to each of right and left portions of the first slide shaft 24, and a rear end attached to a vehicle body-side member, such as a retaining protrusion 10a provided on the floor base portion 10. The biasing means 26 is adapted to bias the first slide shaft 24 rearwardly and downwardly along the front guide grooves 14. The biasing means 26 has a synthetic resin tube member 27 attached thereto to cover an outer periphery thereof so as to suppress generation of noise during stretch and contraction.

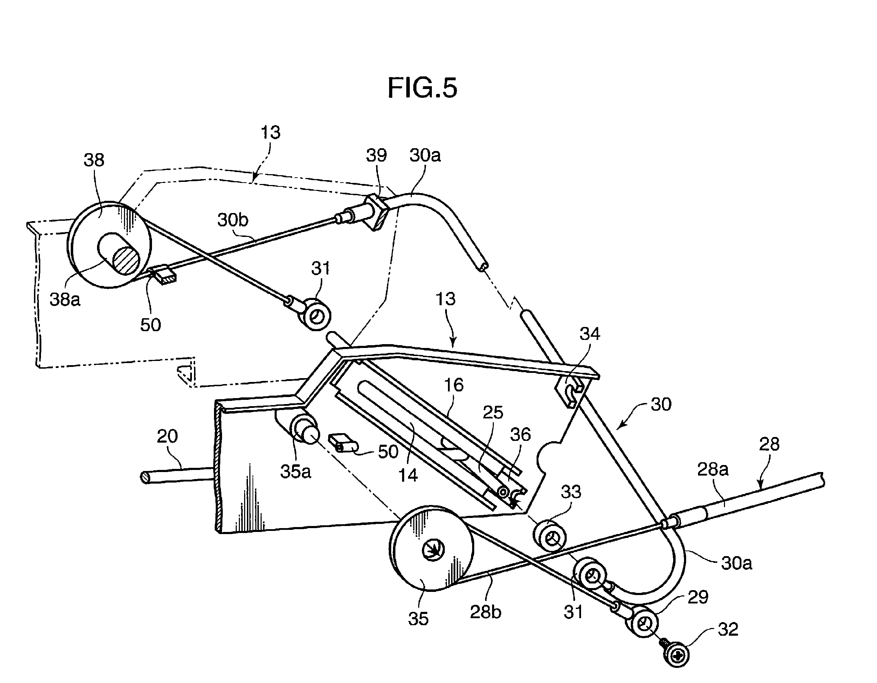

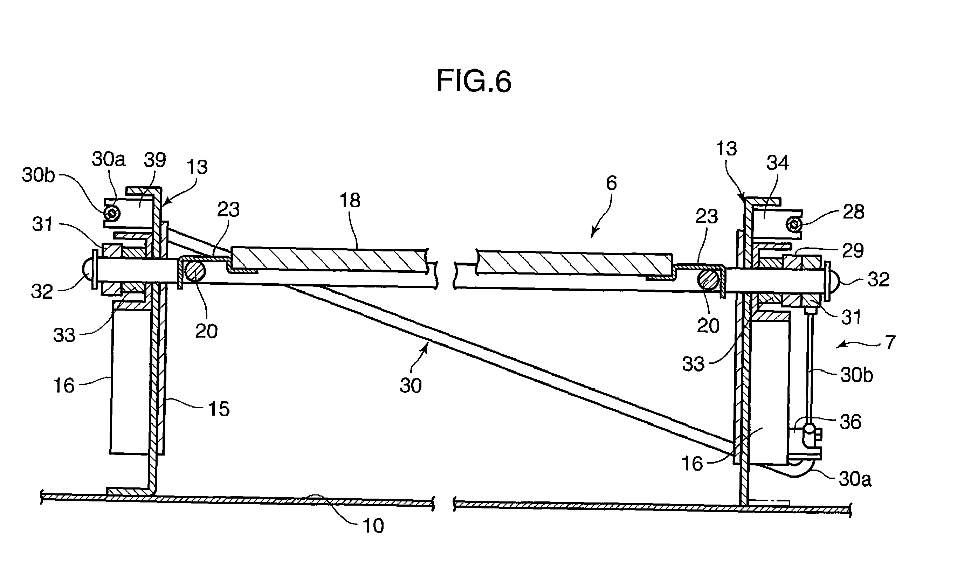

As shown in FIGS. 5 and 6, a first one (in the first embodiment, a laterally outward one) of the lateral ends of the second slide shaft 25 located on a rearward side relative to the first slide shaft 24 is associated with a first cable end ring 29, and a second cable end ring 31. Specifically, the first cable end ring 29 is provided at a distal end of a pull cable 28 which is adapted to transmit a driving force to the first end of the second slide shaft 25 in the form of a tension force during an operation of moving the seat cushion 1a of the driver seat 1 by the seat-position adjusting mechanism 2. The second cable end ring 31 is provided at a proximal end of a transfer cable 30 adapted to transfer the driving force transmitted from the pull cable 28 to the first end of the second slide shaft 25, to the other, second, end (in the first embodiment, a laterally inward end) of the second slide shaft 25. The first and second cable end rings 29, 31 are fixedly fastened to the first end of the second slide shaft 25, through a fastening member 32, such as a flanged screw, and a spacer 33.

The pull cable 28 includes an outer casing 28a comprised of a flexible tube member, and an inner wire 28b slidably supported by the outer casing 28a, and the transfer cable 30 includes an outer casing 30a comprised of a flexible tube member, and an inner wire 30b slidably supported by the outer casing 30a. Based on a driving force input from the seat-position adjusting mechanism 2, the inner wire 28b of the pull cable 28 is slidably moved along the outer casing 28a to transmit the driving force to the first end of the second slide shaft 25 via the inner wire 28b. Further, based on the driving force transmitted to the first end of the second slide shaft 25 via the inner wire 28b, the inner wire 30b of the transfer cable 30 is slidingly moved along the outer casing 30a to transfer the driving force to the second end of the second slide shaft 25 via the inner wire 30b.

The first floor support member 13 located on an laterally outward side relative to the second floor support member 13 has as a retaining portion 34 and a support shaft 35a. The retaining portion 34 is provided at a rear upper position of the first floor support member 13, and a distal (front) end of the outer casing 28a of the pull cable 28 is retained by the retaining portion 34. The support shaft 35a is provided at an upper position of the first floor support member 13 on a frontward side relative to the rear guide member 16, and a guide pulley 35 for allowing a portion of the inner wire 28b led out of the distal end the outer casing 28a to be wound therearound is rotatably supported by the support shaft 35a. The portion of the inner wire 28b of the pull cable 28 is led rearwardly after being wound around the guide pulley 35 from a lower side to an upper side thereof at a winding angle of 180° or more, so that the distal end (first cable end ring 29) is guided downwardly from an upper end of the rear guide member 16. The rear guide member 16 has a lower end provided with a retaining portion 36, and a distal end of the outer casing 30a of the transfer cable 30 is retained by the retaining portion 36.

The second floor support member 13 located on a laterally inward side relative to the first floor support member 13 has a retaining portion 39, and a support shaft 38a. The retaining portion 39 is provided at a rear upper position of the second floor support member 13, and a distal end of the outer casing 30a of the transfer cable 30 is retained by the retaining portion 39. The support shaft 38a is provided at an upper position of the second floor support member 13 on a frontward side relative to the rear guide member 16, and a guide pulley 38 for allowing a portion of the inner wire 30b led out of the distal end the outer casing 30a to be wound therearound is rotatably supported by the support shaft 38a. The portion of the inner wire 30b of the transfer cable 30 is led rearwardly after being wound around the guide pulley 38 from a lower side to an upper side thereof at a winding angle of 180°or more, so that the distal end (second cable end ring 31) is guided downwardly from an upper end of the rear guide member 16.

Each of the first and second floor support members 13 also has a restriction potion 50 provided between the guide member 16 and the guide pulley (35, 38), and adapted to restrict a height position of the inner wire (28b, 30b) of a respective one of the pull cable 28 and the transfer cable 30, which is guided to the lower side of the guide pulley (35, 38) across the guide member 16, in such a manner as to allow the height position of the inner wire (28b, 30b) to become equal to a height position of the guide pulley (35, 38).

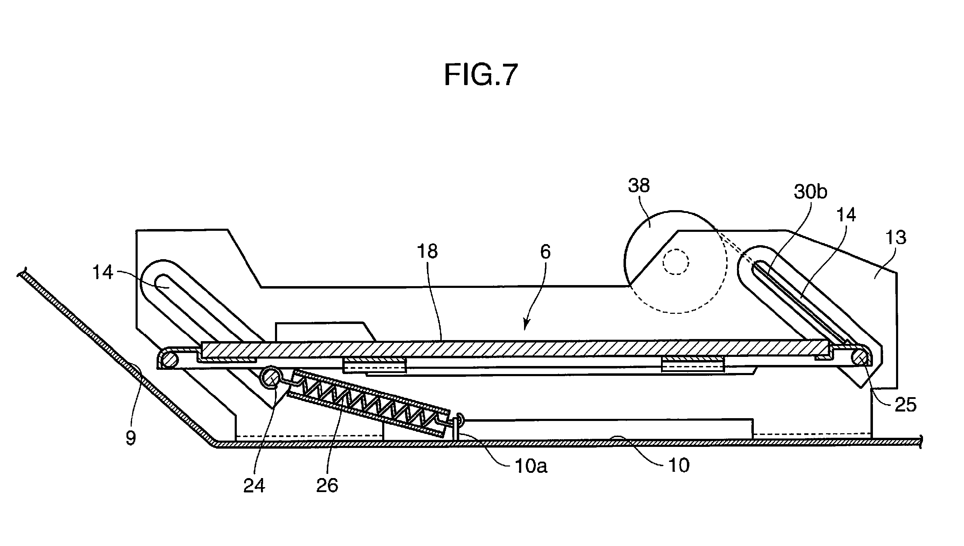

In the above structure, in a state when the seat cushion 1a of the driver seat 1 is set in a rearmost position of a slidable range of the driver seat 1, the movable floor unit 6 is held in a lowermost position according to a biasing force of the biasing means 26 biasing the slide shafts 24, 25 downwardly and a weight of the movable floor unit 6, as shown in FIG. 7. In response to an after-mentioned operation of moving the seat cushion 1a of the driver seat 1 frontwardly from the rearmost position, a driving force of the operation is transmitted the respective lateral ends of the second slide shaft 25 via the pull cable 28 and the transfer cable 30, and thereby the second slide shaft 25 is moved obliquely upwardly along the rear guide grooves 14, so that the movable floor unit 6 is lifted while being moved frontwardly, as shown in FIG. 4.

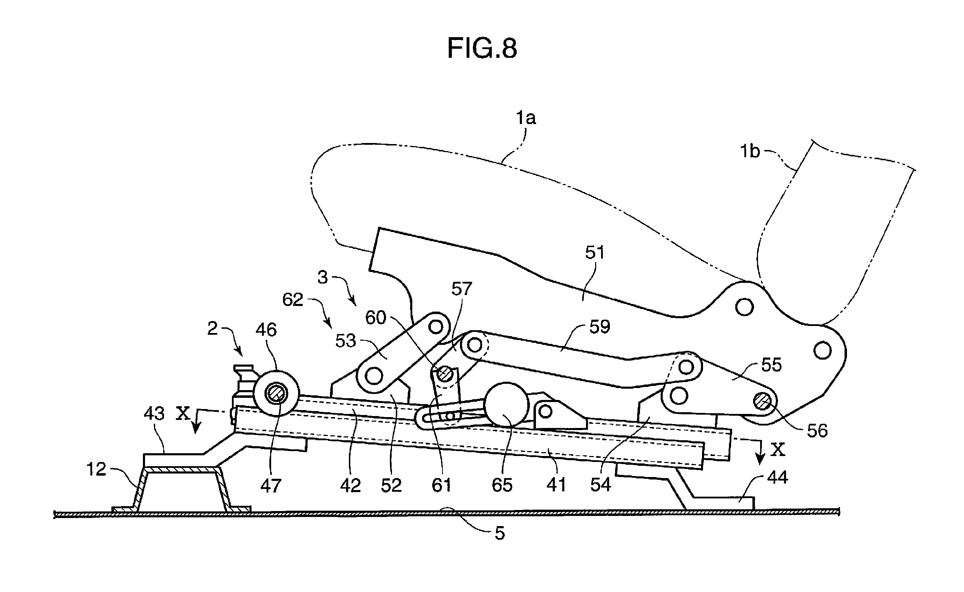

As shown in FIGS. 8 to 10, a pair of right and left seat slide lower rails 41 are installed on the cross member 12 and a portion of the floor panel 5 located in an installation area of the driver seat 1, in such a manner as to support the seat cushion 1a in a frontwardly-rearwardly movable manner. Further, a pair of right and left seat slide upper rails 42 are supported by the respective right and left seat slide lower rails 41 in a slidably displaceable manner. Each of the seat slide lower rails 41 is comprised of a C-shaped steel member having an upper opening, and two brackets 43, 44 are integrally joined to respective front and rear ends of the seat slide lower rail 41 by welding or other fixing means. The brackets 43, 44 are fixed, respectively, to the upper surface of the cross member 12 and the floor panel 5 by fastening bolts or other fastening means, so that each of the seat slide lower rails 41 is installed on the floor panel 5 with a slight frontwardly upward inclination.

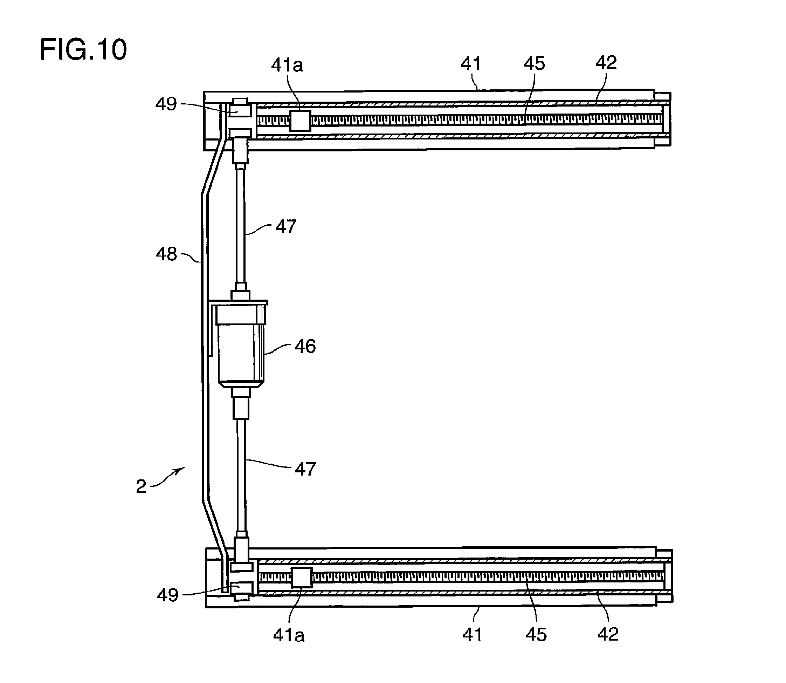

As shown in FIG. 10, a rotary shaft 45 comprised of a screw shaft is rotatably installed within each of the right and left slide lower rails 41. A drive shaft 47 adapted to be drivenly rotated by a drive motor 46, and a support member 48 rotatably supporting the drive shaft 47, are provided to extend laterally between respective front ends of the right and left slide lower rails 41. Further, a driving-force transmission section 49 comprised of a bevel gear mechanism or a worm wheel mechanism is provided at each of right and left ends of the drive shaft 47 to transmit a driving force of the drive shaft 47 to a respective one of the rotary shaft 45. The seat-position adjusting mechanism 2 adapted to slidably displace the seat cushion 1a of the driver seat 1 along the seat slide lower rails 41 so as to adjust a longitudinal position of the driver seat 1 is made up of the seat slide lower rails 41, the seat slide upper rails 42, the rotary shafts 45, the drive motor 46, the drive shaft 47, the driving-force transmission sections 49, and two nut blocks 41 a fixed to respective bottom surfaces of the seat slide lower rails 41 and screwed with the respective rotary shafts 45.

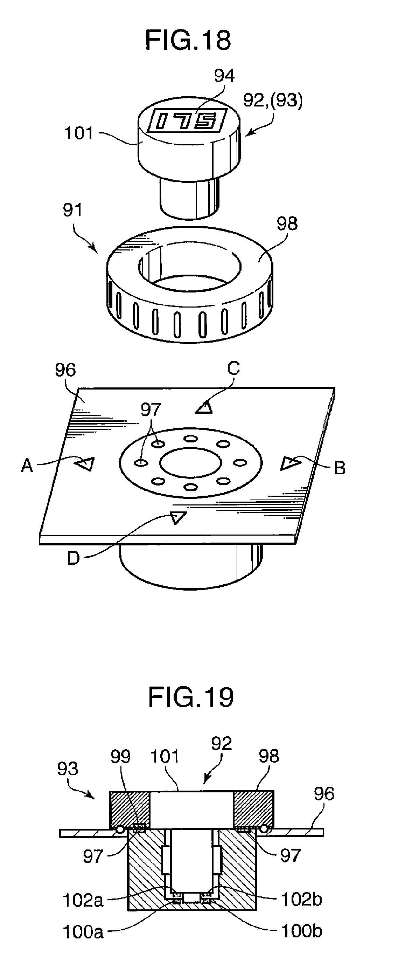

For example, when an after-mentioned seat slide switch 91 or longitudinal-position adjusting switch 92 (see FIG. 18 etc.) is manually operated in a direction for frontward movement, a control signal for rotating the drive motor 46 in a normal direction is output, and the drive motor 46 is rotated in the normal direction in response to the control signal, so that a driving force causing a frontward movement of the seat cushion 1a is transmitted to the drive shaft 47, the driving-force transmission sections 49 and the rotary shafts 45. Thus, the rotary shafts 45 are drivenly rotated by the driving force input from the respective driving-force transmission sections 49, and threadingly moved frontwardly, while being supported by the respective nut blocks 41a each fixed to a respective one of the bottom surfaces of the seat slide lower rails 41, so that the seat cushion 1a of the driver seat 1 is drivenly moved frontwardly together with the seat slide upper rails 42.

When the after-mentioned seat slide switch 91 or longitudinal-position adjusting switch 92 is manually operated in a direction for rearward movement, a control signal for rotating the drive motor 46 in a reverse direction is output, and the drive motor 46 is rotated in the reverse direction in response to the control signal, so that a driving force causing a rearward movement of the seat cushion 1a is transmitted to the drive shaft 47, the driving-force transmission sections 49 and the rotary shafts 45. Thus, the rotary shafts 45 are drivenly rotated in a reverse direction, and threadingly moved rearwardly, so that the seat cushion 1a of the driver seat 1 is drivenly moved rearwardly together with the seat slide upper rails 42.

The seat slide upper rails 42 are provided with the seated-posture adjusting mechanism 3 adapted to selectively displace the seat cushion 1a of the driver seat 1 upwardly and downwardly, and change an inclination angle of the seat cushion 1a and a reclining angle of the seat back 1b, so as to adjust a seated posture of a driver seated in the driver seat 1.

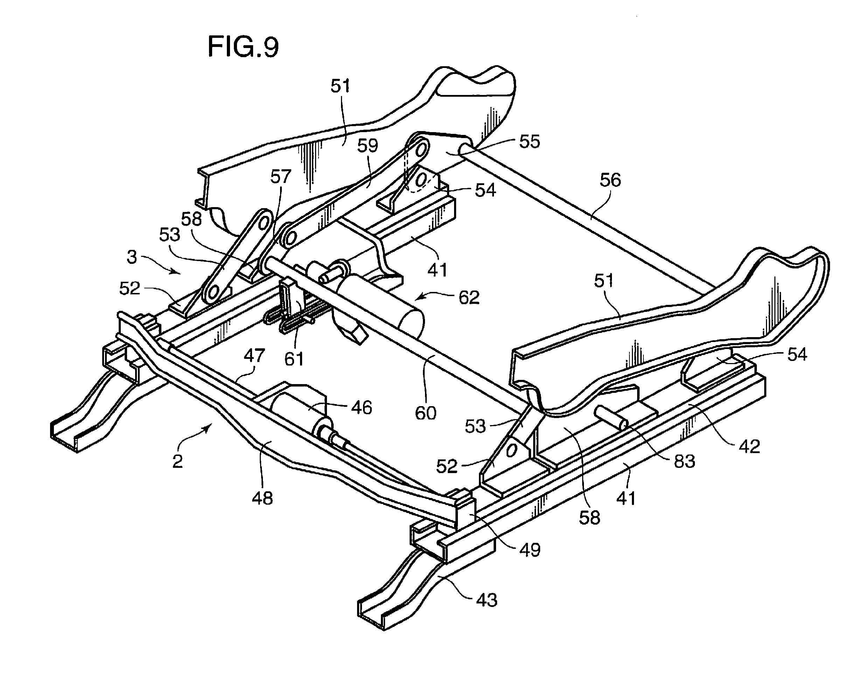

As shown in FIGS. 8 and 9, the seated-posture adjusting mechanism 3 comprises: a pair of right and left cushion frames 51 provided on respective right and left sides of the seat cushion 1a; a pair of right and left front brackets 52 provided on respective upper surfaces of front portions of the right and left seat slide upper rails 42 to support respective front ends of the right and left cushion frames 51 in cooperation with respective ones of a pair of right and left front links 53; a pair of right and left rear brackets 54 provided on respective upper surfaces of rear portions of the right and left seat slide upper rails 42 to support respective rear ends of the right and left cushion frames 51 in cooperation with respective ones of a pair of right and left triangular-shaped rear links 55; a connection shaft 56 connecting respective rear ends of the right and left rear links 55 together and connecting respective rear lower portions of the right and left cushion frames 51 together; a pair of right and left center brackets 58 provided on respective upper surfaces of central portions of the right and left seat slide upper rails 42 to support respective ones of a pair of right and left central links 57 adapted to transfer a driving force to the respective right and left rear links 55; a pair of right and left connection links 59 connecting upper portions of the right and left ventral links 57 to respective front ends of the right and left links 55; an after-mentioned drive shaft 60; an after-mentioned drive lever 61; and an after-mentioned vertical drive section 62.

Each of the right and left central links 57 is fixed to a laterally-extending drive shaft 60 in a lower end thereof, and rotatably supported by the respective right and left central brackets 58 through the drive shaft 60. A drive lever 61 is fixed to the drive shaft 60 to rotatably displace the drive shaft 60. A vertical drive section 62 adapted to drivingly move the drive lever 61 fixed to the drive shaft 60 is mounted on the central bracket 58 provided on one (a laterally inward one) of the right and left seat slide upper rails 42.

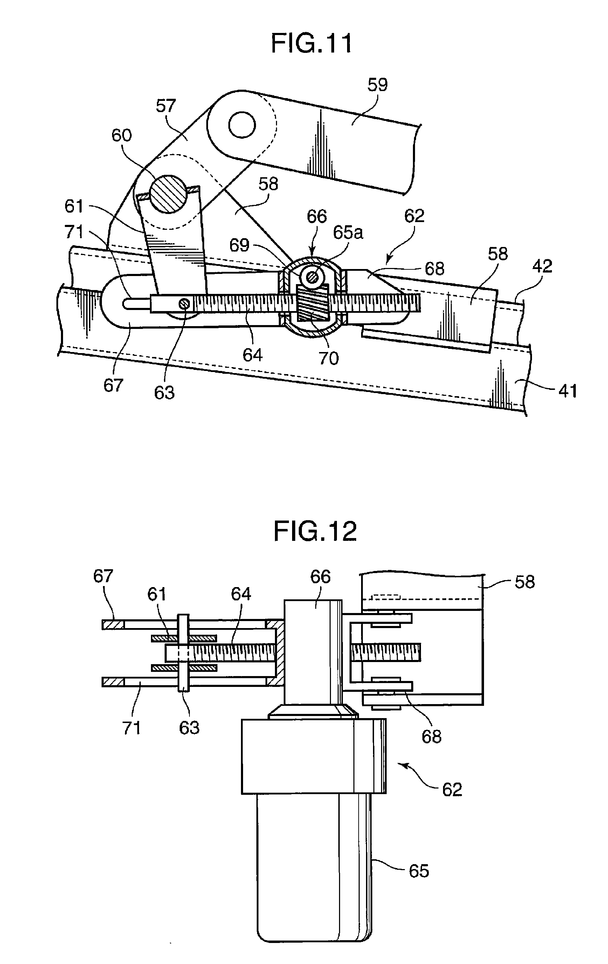

As shown in FIGS. 11 and 12, the vertical drive section 62 comprises a screw shaft 64 having a front end connected to a distal (lower) end of the drive lever 61 through a connection pin 63, a combination of a drive motor 65 and a gear mechanism 66 which is adapted to drivingly rotate the screw shaft 64, and a guide bracket 67 fixedly attached to a front surface of the gear mechanism 66, wherein a base end of the guide bracket 67 is supported by the central bracket 58 through a support bracket 68. The gear mechanism 66 is provided with a worm gear 69 fixedly attached to an output shaft 65a of the drive motor 65, and a worm nut 70 adapted to be drivenly rotated by the worm gear 69, wherein the worm gear 70 is formed with a screw hole screwable with the screw shaft 64.

When the worm nut 70 is drivenly rotated by a driving force input from the drive motor 65 thereto through the worm gear 69, the screw shaft 64 screwed with the worm nut 70 is rotated and threadingly moved. Then, as the screw shaft 64 is threadingly moved in this manner, the connection pin 63 provided at the distal end of the screw shaft 64 is moved in the longitudinal direction along a support groove 71 formed in the guide bracket 67, and a driving force of the screw shaft 64 is transmitted to the drive lever 61 through the connection pin 63. Thus, the drive lever 61 is swingingly displaced to drivingly rotate the drive shaft 60.

Then, as the drive shaft 60 is drivenly rotated, the right and left central links 57 are swingingly displaced, and a driving force of each of the right and left central links 57 is transmitted to the rear link 55 through the connection link 59. Thus, the right and left rear links 55 are swingingly displaced, and therefore the right and left front links 53 are swingingly displaced to drivingly move the seat cushion 1a upwardly and downwardly. That is, in a state when the seat cushion 1a of the driver seat 1 is set on the side of the rearmost position, each of the front link 53 and the central link 57 is in a rearwardly inclined position, and the connection shaft 56 provided at a rear end of the rear link 55 is in a lowered position, as shown in FIG. 8. Thus, a seating surface of the seat cushion 1a is maintained in a lowered position.

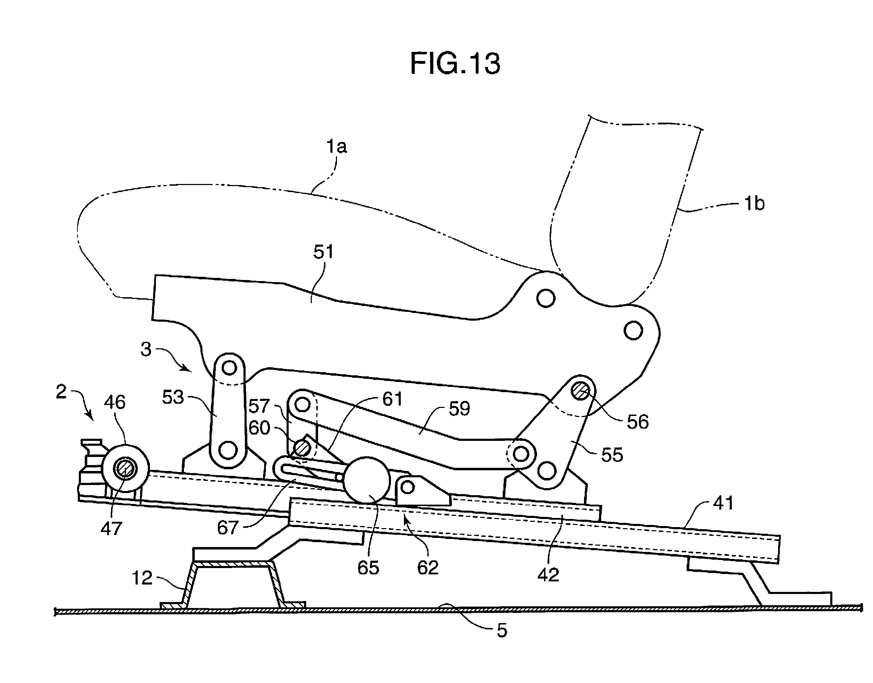

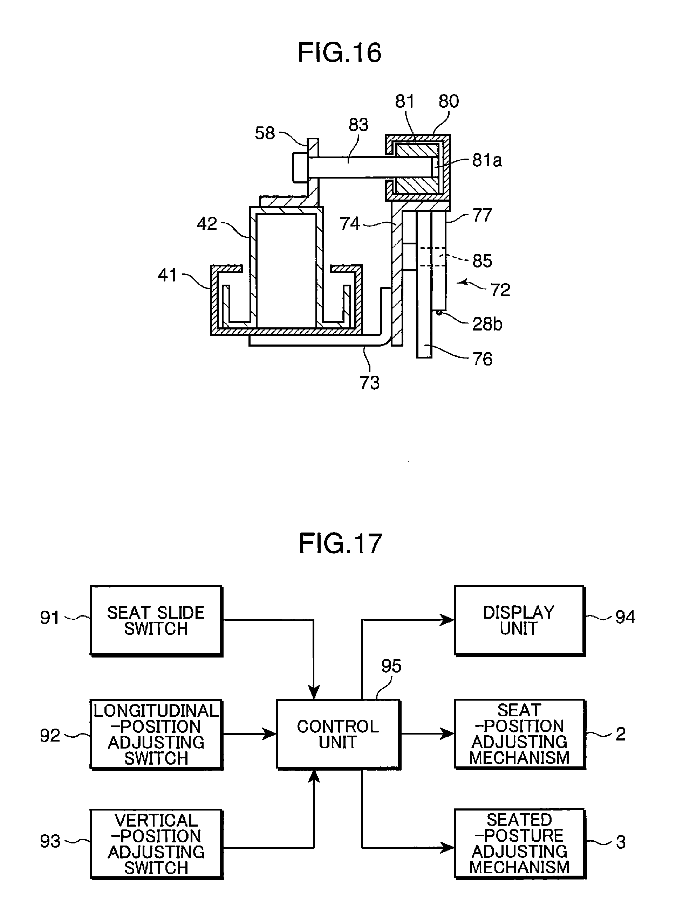

In the above structure, when an after-mentioned vertical-position adjusting switch 93 (see FIG. 18) is manually operated in a direction for lifting, a control signal for driving the drive motor 65 of the seated-posture adjusting mechanism 3 in a normal direction is output from after-mentioned control unit 95 (see FIG. 17). Then, a normal rotational driving force of the drive motor 65 is transmitted to the right and left center links 57 through the gear mechanism 66, the screw shaft 64, the connection pin 63, the drive lever 63 and the drive shaft 60, and each of the right and left central links 57 is moved from the rearwardly inclined position to an upstanding position, as shown in FIG. 13. Then, as each of the right and left central links 57 is moved to the upstanding position, a driving force of each of the right and left central link 57 is transmitted to the rear link 55 through the connection link 59, and respective front ends of the right and left rear links 55 are pulled frontwardly. Thus, the connection shaft 56 provided at the rear ends of the right and left rear links 55 is lifted, and therefore the rear end of the seat cushion 1a is drivenly pushed and moved upwardly.

Further, in conjunction with the swing displacement of the right and left rear links 55, each of the right and left front links 53 is moved from the rearwardly inclined position to the upstanding position, and therefore the seat cushion 1a is drivenly moved frontwardly while the front end thereof is pushed and moved upwardly. Thus, the seat cushion 1a is displaced from the lowered position to a lifted position, as shown in FIG. 13. In the first embodiment, a lift amount in the rear end of the seat cushion 1a is set to be greater than that in the front end of the seat cushion 1a, so that, along with the upward movement of the seat cushion 1a, the inclination angle of the seating surface of the seat cushion 1a will gradually decrease, and the reclining angle of the seat back 1b will gradually decrease and get closer to a vertical position.

When the after-mentioned vertical-position adjusting switch 93 is manually operated in a direction for lowering, a control signal for driving the drive motor 65 of the seated-posture adjusting mechanism 3 in a reverse direction is output from the after-mentioned control unit 95. Then, a reverse rotational driving force of the drive motor 65 is transmitted to the right and left center links 57 through the gear mechanism 66, the screw shaft 64, the connection pin 63, the drive lever 63 and the drive shaft 60, and finally the seat cushion 1a is displaced from the lifted position to the lowered position as shown in FIGS. 1 and 8. Further, along with the downward movement of the seat cushion 1a, the inclination angle of the seating surface of the seat cushion 1a will gradually increase, and the reclining angle of the seat back 1b will gradually increase.

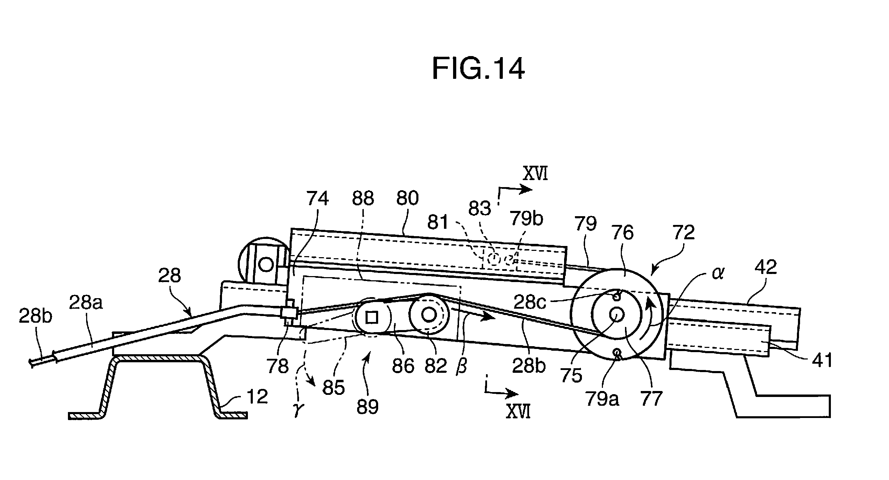

As shown in FIGS. 14 to 16, one of the seat slide lower rails 41 of the driver seat 1 is provided with a winding mechanism 72 and a fine adjustment mechanism 89. The winding mechanism 72 is adapted to reduce a pull stroke of the pull cable 29 to be transmitted to the floor lifting/lowering mechanism 7, during frontward movement of the seat cushion 1a, wherein a rear end of (inner wire 28b) of the pull cable 28 led rearwardly from the installation zone of the floor lifting/lowering mechanism 7 via the cross member 12 is wound around the winding mechanism 72. The fine adjustment mechanism 89 is adapted to remove a slack of the pull cable 28 to apply a given tension to the inner wire 28a, and finely adjust the height position of the movable floor unit 6 by a manual operation.

The winding mechanism 72 comprises a pair of front and rear brackets 73 fixed to the seat slide lower rail 41, a support plate 74 having front and rear ends fixed to the respective front and rear brackets 73 and extending upwardly at a position on a lateral side of the seat slide lower rail 41, a support shaft 75 provided in a rear end of the support plate 74 to protrude therefrom, a large-diameter pulley 76 rotatably supported by the support shaft 75, and a small-diameter pulley 77 connected to the large-diameter pulley 76 in an integrally rotatable manner. The support plate 74 has a front end provided with a retaining portion 78 retaining a base (rear) end of the outer casing 28a of the pull cable 28. A portion of the inner wire 28b led out rearwardly from the base end of the outer casing 28a retained by the retaining portion 78 is wound around the small-diameter pulley 77, and a T-shaped end clip 28c provided at a base end of the inner wire 28b is engaged with an outer periphery of the small-diameter pulley 77. A drive wire 79 is wound around the large-diameter pulley 76, and a T-shaped end clip 79a provided at one end of the drive wire 79 is engaged with an outer periphery of the large-diameter pulley 76.

The other end of the drive wire 79 is introduced into a guide member 80 comprised of a sectionally C-shaped steel member or the like and attached onto the support plate 74, to extend frontwardly. A slide block 81 is provided within the guide member 80, and slidably supported by the guide member 80. The slide block 81 is formed with an engagement hole 81a fittable with a drive pin 83 protruding laterally from the central block 58 attached onto the upper surface of the seat slide upper rail 42, and a retaining hole for retaining a T-shaped end clip 79b provided at the other end of the drive wire 79.

Through an operation of fittingly inserting the drive pin 83 of the seat slide upper rail 42 into the engagement hole 81a of the slide block 81, the base end of the pull cable 28 is connected to the seat cushion 1a through the drive wire 79, the drive pin 83, the seat slide upper rail 42 and other associated components. Thus, during the frontward movement of the seat cushion 1a, the resulting driving force is converted to a force for pulling the inner wire 28b of the pull cable 28, and a pull stroke of the inner wire 28b is transmitted to the floor lifting/lowering mechanism 7 after a pull stroke of the drive wire 79 is reduced by a stroke reduction mechanism comprises of the winding mechanism 72 having the large-diameter pulley 76 and the small-diameter pulley 77.

Specifically, when the seat cushion 1a is drivenly moved frontwardly by the seat-position adjusting mechanism 2, the slide block 81 is moved frontwardly along the guide member 80 in conjunction with the frontward movement of the seat cushion 1a, and the other end (T-shaped end clip 79b) is pulled frontwardly to drivingly rotate the large-diameter pulley 76 in a counterclockwise direction (direction indicated by an arrow α). In conjunction with the rotation of the large-diameter pulley 76, the small-diameter pulley 77 is rotated by the same angle, so that the pull stroke of the drive wire 79 is reduced by a reduction ratio corresponding to a ratio between respective diameters of the two pulleys 76, 77, and the reduced stroke is transmitted to the inner wire 28b of the pull cable 28. Thus, a driving force in a direction (direction indicated by an arrow β) for pulling out the inner wire 28b from the outer casing 28a of the pull cable 28 rearwardly is generated, and transmitted to a lifting section comprised of the slide shaft 25 of the floor lifting/lowering mechanism 7, so that the slide shafts 24, 25 are slidingly displaced obliquely upwardly along the guide grooves 14 to driven the movable floor unit 6 upwardly.

The fine adjustment mechanism 89 comprises holding means 84 comprised of a ratchet mechanism or the like and provided on an inner wall surface of the support plate 74, an manual operation lever 85 having a drive shaft 85a fittingly attached to the holding means 84, a swing arm 86 detachably attached to the drive shaft 85a of the manual operation lever 85, a dancer pulley 87 supported by a distal end of the swing arm 86, and a protective cover 88 covering an installation area of the swing arm 84 and other associated components.

In an operation of assembling the driving posture adjusting apparatus to a vehicle body, the inner wire 28a of the pull cable 28, the manual operation lever 85, the swing arm 86 and other associated components are mounted to the protective cover 88, and this assembly is carried in a passenger compartment together with the seat-position adjusting mechanism 2. Then, after installing the seat-position adjusting mechanism 2 and the floor lifting/lowering mechanism 7, the drive shaft 85a of the manual operation lever 85 is fittingly attached to the holding means 84. Then, the T-shaped end clip 28c provided at the base end of the inner wire 28b led rearwardly via the dancer pulley 87 is engaged with the outer periphery of the small-diameter pulley 77, and the protective cover 88 is fixedly fastened to an outer wall surface of the support plate 74 by screw clamping or other fastening means, so that the slide shaft 25 of the floor lifting/lowering mechanism 7 is connected to the seat cushion 1a through the stroke reduction mechanism comprises of the winding mechanism 72 having the large-diameter pulley 76 and the small-diameter pulley 77.

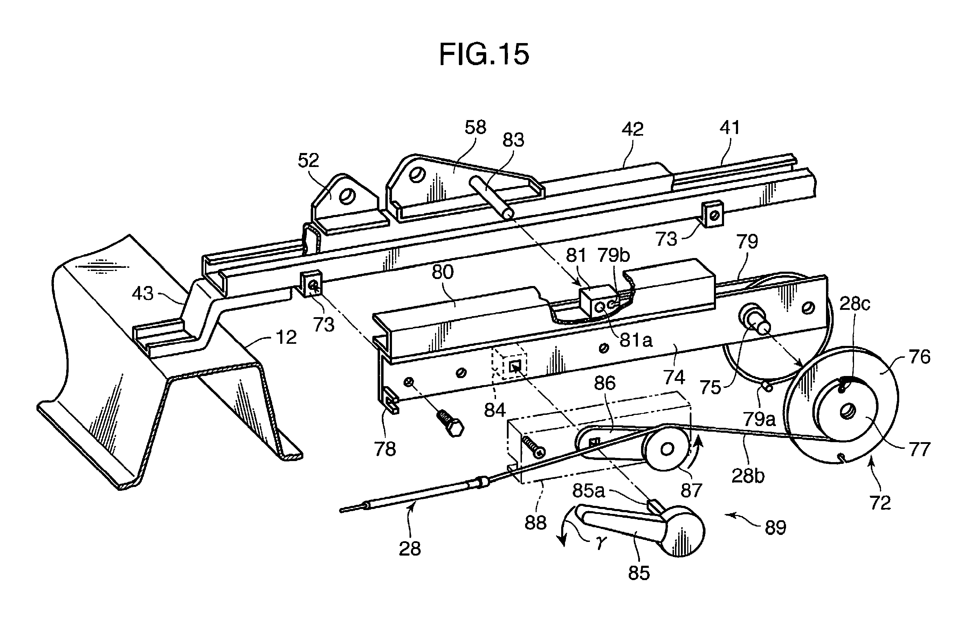

In an operation of removing a slack of the pull cable 28 using the fine adjustment mechanism 89 to apply a given tension to the inner wire 28b, the manual operation lever 85 is swingingly operated in a direction causing a distal end thereof to be moved downwardly as indicated by the arrow γ in FIGS. 14 and 15, to swingingly displace the swing arm 86 in a direction causing the dancer pulley 87 to be moved upwardly. Then, the manual operation lever 85 is held at a resulting swing angle by the holding means 84 comprised of a ratchet mechanism or the like. Thus, the inner wire 28b of the pull cable 28 is held in a state after being pushed and moved upwardly to a given position through the dancer pulley 87, and a tension corresponding to the upward force is applied to the inner wire 28b.

Further, when the manual operation lever 85 is swingingly operated in a direction causing the dancer pulley 87 to be moved upwardly in the above manner, a driving force causing the inner wire 28b to be pulled out rearwardly from the rear end of the outer casing 28a is generated. This driving force is transmitted to the lifting section comprised of the slide shaft 25 of the floor lifting/lowering mechanism 7 to drivingly move the movable floor unit 6 upwardly, so that a height position of the movable floor unit 6 is finely adjusted by a manual operation. More specifically, according to the driving force input from the inner wire 28b of the pull cable 28 into the slide shaft 25, the slide shaft 25 is lifted along the guide grooves 14, and therefore the movable floor unit 6 is moved obliquely upwardly, so that the height position of the movable floor unit 6 is finely adjusted.

In an operation of reducing the tension placed on the pull cable 28 through the fine adjustment mechanism 89, or finely adjusting the height position of the movable floor unit 6 manually in a direction causing the movable floor unit 6 to be moved upwardly, a holding release lever (not shown) is manually operated to release a holding force of the holding means 84 relative to the swing arm 86. Through this operation, the upward force of the dancer pulley 87 relative to the inner wire 28b is released to reduce a tension to be applied to the inner wire 28b. Then, the manual operation lever 85 may be swingingly operated in a direction causing the distal end thereof to be moved upwardly, to further reduce a tension to be applied to the inner wire 28b. In this case, a pull force to be transmitted to the lifting section comprised of the slide shaft of the floor lifting/lowering mechanism 7 is set at zero. Thus, according to the biasing force of the biasing means 26, the slide shaft 24 is lowered along the guide grooves 14 to move the movable floor unit 6 downwardly, so that the height position of the movable floor unit 6 is finely adjusted.

As shown in FIG. 17, the driving posture adjusting apparatus further comprises a seat slide switch 91 adapted to issue an instruction for actuating the seat-position adjusting mechanism 2 to move the driver seat 1 in the longitudinal direction; a longitudinal-position adjusting switch 92 adapted to issue an instruction for actuating the seat-position adjusting mechanism 2 to finely adjust the longitudinal position of the driver seat 1; a vertical-position adjusting switch 93 adapted to issue an instruction for actuating the seated-posture adjusting mechanism 3 to selectively displace the seat cushion 1a of the driver seat 1 upwardly and downwardly; a display unit 94 adapted to display a value of body height (i.e., driver's body height) input by manually operating the seat slide switch 91; and a control unit 95 adapted to output a control signal corresponding to a manual operation of each of the switches 91 to 93, to at least each of the seat-position adjusting mechanism 2 and the seated-posture adjusting mechanism 3.

As shown in FIGS. 18 and 19, the seat slide switch 91 comprises: a plurality of first contacts 97 provided on a switch panel 96 and arranged on a circle at certain intervals; a dial-type manual operation member 98 rotatably supported by the switch panel 96; and a second contact 99 provided on a lower surface of the dial-type manual operation member 98. According to a turning operation of the dial-type manual operation member 98, the second contact 99 is selectively brought into contact with one of the first contacts 97 in such a manner as that the value of body height to be input is changed in increments of a predetermined reference length, for example, of about 1 to 5 cm, depending on the selected first contact 97, and the value is input into the control unit 95. Then, the control unit 95 performs a control operation of displaying the input value of body height on the display unit 94 composes of a liquid-crystal display and installed in an upper surface of an after-mentioned lever-type manual operation member 101, and a control operation of adjusting at least the longitudinal position of the driver seat 1 and a height position of the seat cushion 1a, in correlation with the input value of body height.

The longitudinal-position adjusting switch 92 comprises: a pair of front and rear third contacts 100a, 100b provided in a lower portion of the switch panel 96; a lever-type manual operation member 101 swingably supported by the switch panel 96; and a pair of front and rear fourth contacts 102a, 102b provided on a lower surface of the lever-type manual operation member 101. When an operator (i.e., driver) swingingly operates the lever-type manual operation member 101 frontwardly, i.e., in a direction indicated by an arrow mark A, while gripping the dial-type manual operation member 98, to allow the front fourth contact 102a to be brought into contact with the front third contact 100a, an instruction signal instructing to move the driver seat 1 frontwardly is input into the control unit 95. When an operator swingingly operates the lever-type manual operation member 101 rearwardly, i.e., in a direction indicated by an arrow mark B, while gripping the dial-type manual operation member 98, to allow the rear fourth contact 102b to be brought into contact with the rear third contact 100b, an instruction signal instructing to move the driver seat 1 rearwardly is input into the control unit 95.

The vertical-position adjusting switch 93 comprises a pair of fifth contacts (not shown) provided in the lower portion of the switch panel 96 (and arranged in side-by-side relation to each other in a direction perpendicular to the drawing sheet of FIG. 19); and a pair of sixth contacts (not shown) provided on the lower surface of the lever-type manual operation member 101 at positions corresponding to the respective fifth contacts. When an operator swingingly operates the lever-type manual operation member 101 in a direction indicated by an arrow mark C, while gripping the dial-type manual operation member 98, to allow one of the sixth contacts to be brought into contact with a corresponding one of the fifth contacts, an instruction signal instructing to displace the seat cushion 1a of the driver seat 1 upwardly is input into the control unit 95. When an operator swingingly operates the lever-type manual operation member 101 in a direction indicated by an arrow mark D, while gripping the dial-type manual operation member 98, to allow the other sixth contact to be brought into contact with the corresponding fifth contact, an instruction signal instructing to displace the seat cushion 1a of the driver seat 1 downwardly is input into the control unit 95.

In response to input of each of the instruction signals from the longitudinal-position adjusting switch 92 and the vertical-position adjusting switch 93, the control unit 95 outputs an actuation command signal to each of the drive motor 46 of the seat-position adjusting mechanism 2 and the drive motor 65 of the seated-posture adjusting mechanism 3, to perform each of a control operation of moving the seat cushion 1a of the driver seat 1 in the longitudinal direction so as to finely adjust the longitudinal position of the driver seat 1, and a control operation of finely adjusting a vertical position and an inclination angle of the seat cushion 1a and a reclining angle of the seat back 1b.

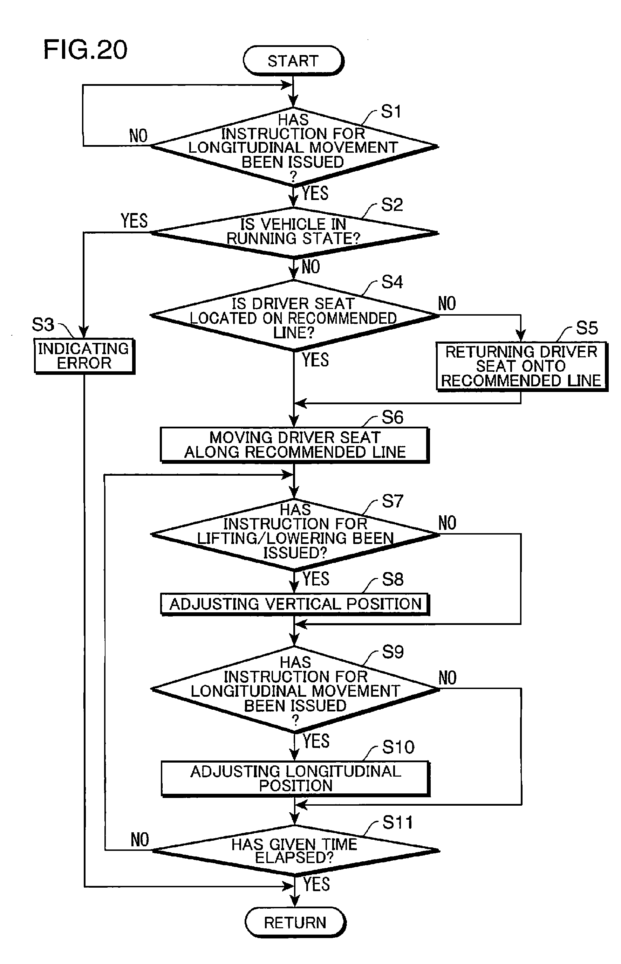

FIG. 20 is a flowchart showing a control routine to be executed in the control unit 95 in response to the respective manual operations of the switches 91 to 93. Upon start of this control routine, the seal slide switch 91 is placed in an ON state, and it is determined whether the instruction for moving the seat cushion 1a of the driver seat 1 in the longitudinal direction has been issued (Step S1). If the determination is YES, it is determined whether the vehicle is in a running state, based, for example, on an output signal from a wheel speed sensor (not shown) (Step S2). If the determination in Step S2 is YES, information about error is displayed on the display unit 94 or other display unit (Step S3) to inform an operator of a fact that a driving posture adjusting control operation is in an inhibited state, and then the routine is returned to Step S1.

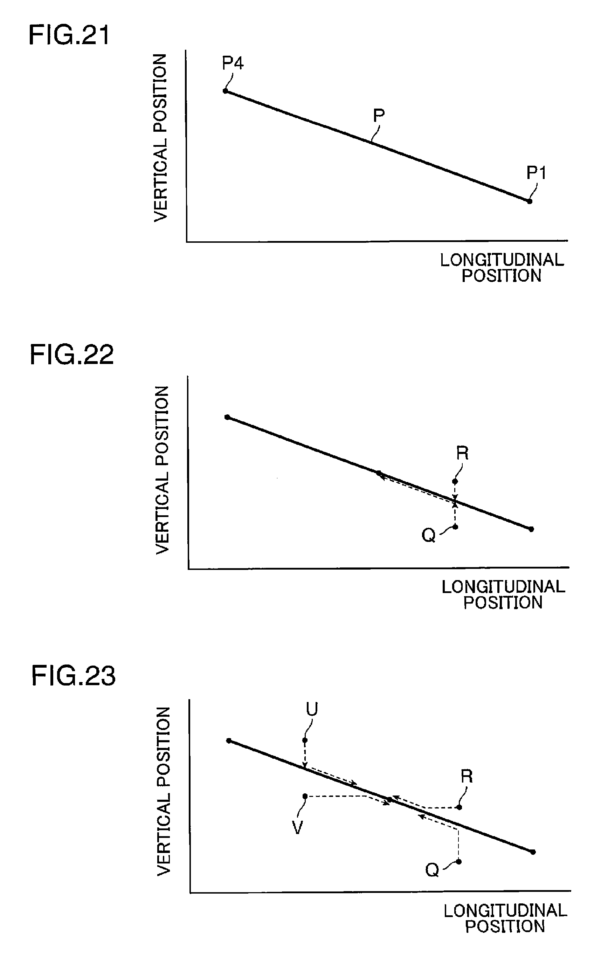

If the determination in Step S2 is NO, i.e., it is detected that the vehicle is in a stopped state, it is determined whether the seat cushion 1a of the driver seat 1 is located on a recommended position line P as shown in FIG. 21 (Step S4). This recommended position line P is set based on pre-obtained experimental or simulation data. Specifically, a recommended position for achieving an optimal driving position in conformity to a body size of a driver, such as a longitudinal position of the driver seat 1 and a vertical position of the seat cushion 1a corresponding to the longitudinal position of the driver seat 1, is derived based on pre-obtained experimental or simulation data, and the recommended position line P is set in line with the obtained recommended position.

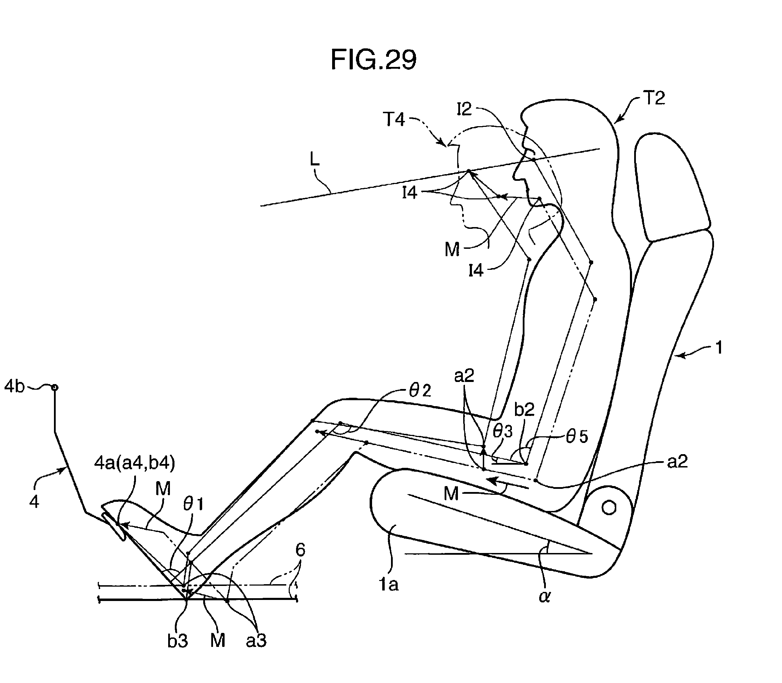

More specifically, a height position and an inclination angle of the seat cushion 1a and a reclining angle of the seat back 1b, which allow an eye point (height position of a visual point) I1 of a driver seated in the driver seat 1 to lie on a proper line L while allowing the driver to maintain a comfortable seated posture, and allow an optimal position (ball region) of a sole of the driver to be brought into contact with an operation point 4a (see FIG. 29 etc.) of the operation pedal 4, under conditions that the driver is a tall person T1 having a body height, for example, of about 188 cm, and the driver seat 1 is set in a rearmost position of a movable range in the longitudinal direction as shown in FIG. 1, are derived based on a standard body size of the tall person T1, design data about driving posture adjusting apparatuses and others. Then, the longitudinal position (rearmost position) of the driver seat 1 and the obtained height position of the seat cushion 1a are plotted on the graph illustrated in FIG. 21 to set a start point P1 of the recommended position line P.

Further, a height position and an inclination angle of the seat cushion 1a and a reclining angle of the seat back 1b, which allow an eye point I4 of a driver seated in the driver seat 1 to lie on the proper line L while allowing the driver to maintain a comfortable seated posture, and allow an optimal position of a sole of the driver to be brought into contact with the operation point 4a of the operation pedal 4, under conditions that the driver is a short person T4 having a body height, for example, of about 150 cm, and the driver seat 1 is set in a frontmost position of the longitudinally movable range as shown in FIG. 1, are derived based on a standard body size of the short person T4, the design data about driving posture adjusting apparatuses and others. Then, the longitudinal position (frontmost position) of the driver seat 1 and the obtained height position of the seat cushion 1a are plotted on the graph illustrated in FIG. 21 to set an end point P4 of the recommended position line P.

Subsequently, a distance between the start point and the end point of the recommended position line P is divided equally into a plurality parts, e.g., eight parts, to derive respective longitudinal positions of the driver seat 1 when a body height of a driver to be seated in the driver seat 1 gradually increases in increments of a reference length, for example, of about 5 cm. Then, a height position and an inclination angle of the seat cushion 1a and a reclining angle of the seat back 1b, which allow an eye point (height of a visual point) of a driver seated in the driver seat 1 to lie on the proper line L while allowing the driver to maintain a comfortable seated posture, and allow an optimal position (ball region) of a sole of the driver to be brought into contact with the operation point 4a of the operation pedal 4, under conditions that the driver is each of a plurality of persons having the respective body heights, and the driver seat 1 is set in each of the longitudinal positions, are derived based on a standard body size of each of the persons, the design data about driving posture adjusting apparatuses and others. Then, a recommended position including the longitudinal positions of the driver seat 1 and the obtained height positions of the seat cushion 1a are plotted on the graph illustrated in FIG. 21 to form a continuous line so as to set the recommended position line P.

If the determination in Step S4 is NO, i.e., it is detected that the seat cushion 1a of the driver seat 1 is not located on the recommended position line P, the routine performs a control operation of displacing the height position of the seat cushion 1a to allow it to be returned onto the recommended position line P (Step S5). Specifically, when it is detected that the seat cushion 1a is located at a point R above the recommended position line P or at a point Q below the recommended position line P, as shown in FIG. 22, based, for example, on control data stored in storage means (not shown), or a detection signal from a sensor for detecting respective positions of the seat cushion, the drive motor 65 of the seated-posture adjusting mechanism 3 is actuated to lift or lower the seat cushion 1a so as to move the seat cushion 1a onto the recommended position line P.

Then, the seat cushion 1a of the driver seat 1 is moved along the recommended position line P, according to the value of driver's body height input through the seat slide switch 91 (Step S6). For example, if a driver who newly gets into the vehicle inputs his/her body height as 170 cm using the seat slide switch 91 under a condition that another driver has input his/her body height as 175 cm during a previous control operation, the routine performs a control operation of outputting a drive signal for normal rotation to each of the drive motor 46 of the seat-position adjusting mechanism 2 and the drive motor 65 of the seated-posture adjusting mechanism 3, to move the seat cushion 1a of the driver seat 1 frontwardly along the seat slide lower rails 41 while lifting the seat cushion 1a, based on a control value set in conformity to a difference in body height between the two drivers, as indicated by the arrow in FIG. 22.

If it is detected, based on an input signal through the seat slide switch 91, that a value of body height of a driver seated in the driver seat 1 is greater than a value of body height of a previous driver, the routine performs a control operation of outputting a drive signal for reverse rotation to each of the drive motor 46 of the seat-position adjusting mechanism 2 and the drive motor 65 of the seated-posture adjusting mechanism 3, to move the seat cushion 1a of the driver seat 1 rearwardly along the seat slide lower rails 41 while lowering the seat cushion 1a, based on a control value set in conformity to a difference in body height between the two drivers.

As above, during the control operation of selectively moving the seat cushion 1a frontwardly/rearwardly and upwardly/downwardly based on a control value set in conformity to a difference in body height between two drivers, the seat cushion 1a is moved along the recommended position line P, and the inclination angle of the seat cushion 1a and the reclining angle of the seat back 1b are adjusted through the seated-posture adjusting mechanism 3, so that the longitudinal position and other positions of the driver seat 1 are adjusted in conformity to the recommended position set based on the pre-obtained experimental or simulation data to achieve a proper posture, and a driving force from the movement of the seat cushion 1a is transferred to the floor lifting/lowering mechanism 7 via the pull cable 28 to drivingly lift/lower the movable floor unit 6 to a proper position capable of ensuring controllability for the control pedal 4.

The above control operation of moving the seat cushion 1a of the driver seat 1 frontwardly according to a value of driver's body height input through the seat slide switch 91 may be configured as follows. Firstly, it is determined whether the seat cushion 1a is located above or below the recommended position line P. As a result, if it is detected that the seat cushion 1a is located above the recommended position line P as indicated by the point R in FIG. 23, a control operation is firstly performed such that the drive motor 46 of the seat-position adjusting mechanism 2 is actuated to move the seat cushion 1a of the driver seat 1 frontwardly along the seat slide lower rails 41 by a given distance. Then, at a time when it is detected that the seat cushion 1a is moved onto the recommended position line P, both the drive motor 46 of the seat-position adjusting mechanism 2 and the drive motor 65 of the seated-posture adjusting mechanism 3 are actuated to move the seat cushion 1a of the driver seat 1 obliquely upwardly along the recommended position line P. This configuration makes it possible to the seat cushion to a proper position by the shortest distance.

On the other hand, if it is detected that the seat cushion 1a is located below the recommended position line P as indicated by the point Q in FIG. 23, the drive motor 65 of the seated-posture adjusting mechanism 3 is actuated to lift the seat cushion 1a to move the seat cushion 1a onto the recommended position line P. Then, both the drive motor 46 of the seat-position adjusting mechanism 2 and the drive motor 65 of the seated-posture adjusting mechanism 3 are actuated to move the seat cushion 1a of the driver seat 1 obliquely upwardly along the recommended position line P.

The above control operation of moving the seat cushion 1a of the driver seat 1 rearwardly according to a value of driver's body height input through the seat slide switch 91 may be configured as follows. If it is detected that the seat cushion 1a is located below the recommended position line P as indicated by a point V in FIG. 23, the routine performs a control operation of moving the seat cushion 1a of the driver seat 1 rearwardly along the seat slide lower rails 41 by a given distance, and then at a time when it is detected that the seat cushion 1a is moved onto the recommended position line P, moving the seat cushion 1a of the driver seat 1 obliquely downwardly along the recommended position line P, so as to move the seat cushion to a proper position by the shortest distance.

On the other hand, if it is detected that the seat cushion 1a is located above the recommended position line P as indicated by a point U in FIG. 23, the seat cushion 1a of the driver seat 1 is lifted to move the seat cushion 1a onto the recommended position line P, and then moved obliquely downwardly along the recommended position line P.

After moving the seat cushion 1a of the driver seat 1 according to a value of driver's body height input through the seat slide switch 91, in the above manner, it is determined whether an instruction for lifting or lowering the seat cushion 1a is issued based on the manual operation of the vertical-position adjusting switch 93 (Step S7). If the determination is YES, the motor 65 of the seated-posture adjusting mechanism 3 is actuated within a period where the vertical-position adjusting switch 93 is manually kept in an ON state, to lift or lower the seat cushion 1a, depending on the operated direction of the vertical-position adjusting switch 93 so as to finely adjust the vertical position of the seat cushion 1a (Step S8).

Then, it is determined whether an instruction of moving the seat cushion 1a of the driver seat 1 in the longitudinal direction is issued based on the manual operation of the longitudinal-position adjusting switch 92 (Step S9). If the determination is YES, the motor 46 of the seat-position adjusting mechanism 2 is actuated within a period where the longitudinal-position adjusting switch 92 is manually kept in an ON state, to move the seat cushion 1a frontwardly or rearwardly along the seat slide lower rails 41, depending on the operated direction of the longitudinal-position adjusting switch 92 so as to finely adjust the longitudinal position of the seat cushion 1a (Step S10).

Subsequently, it is determined whether a given time has elapsed without the manual operations of the vertical-position adjusting switch 93 and the longitudinal-position adjusting switch 92 (Step S11). If the determination is NO, the routine is returned to Step S9, and the above control operation will be repeated. Then, at a time when the determination in Step S11 becomes YES, i.e., it is detected that the driver seated in the driver seat 1 has stopped the fine adjustment operation of manually operating the vertical-position adjusting switch 93 or the longitudinal-position adjusting switch 92, based on his/her judgment that a driving posture becomes proper, the above control routine is terminated.

As above, the driving posture adjusting apparatus according to the first embodiment comprises the seat-position adjusting mechanism 2 adapted to move the seat cushion 1a of the driver seat 1 in a longitudinal direction of a vehicle body so as to adjust a longitudinal position of the driver seat 1, the seated-posture adjusting mechanism 3 adapted to adjust a seated posture of a driver seated in the driver seat 1, and the controllability adjusting mechanism comprised of the floor lifting/lowering mechanism 7 adapted to adjust controllability for the operation pedal 4 to be operated by the driver. The driving posture adjusting apparatus further comprises the seat slide switch 91 adapted to issue an instruction for actuating the seat-position adjusting mechanism 2 to move the seat cushion 1a of the driver seat 1 in the longitudinal direction, and the control unit 95 operable to actuate the seated-posture adjusting mechanism 3 and the controllability adjusting mechanism comprised of a floor lifting/lowering mechanism 7, in correlation with the longitudinal position of the driver seat 1 adjusted according to an input signal through the seat slide switch 91, so as to obtain a driving posture corresponding to a predetermined recommended position. This provides an advantage of being able to adjust a driving posture of a driver seated on the driver seat 1 in an easy and proper manner.

Specifically, if there is a difference in body height between two drivers, other body size, such as seated height and leg length, is also different approximately in proportion to the difference in body height. Thus, an eye point and controllability for the operation pedal 4 vary depending on a body size of a driver seated in the driver seat 1. Therefore, a proper seated position and driving posture of a driver seated in the driver seat 1, which allow an eye point of the driver to lie on the proper line L while allowing the driver to be seated in a comfortable posture, and allow a ball region of a sole of the driver to be properly brought into contact with the operation point 4a of the operation pedal 4, also vary depending on a body size of the driver.

In view of this problem, the recommended position line P is set based on data pre-obtained by correlating a driver's body size (body height) with a recommended position comprising the longitudinal position of the driver seat 1, the vertical position and inclination angle of the seat cushion 1a, and the reclining angle of the seat back 1b, which provide a proper seated position and driving posture of each driver. Then, the seat-position adjusting mechanism 2 is actuated according to a value of driver's body height input through the seat slide switch 91 to move the seat cushion 1a in the longitudinal direction, and a control signal set based on the longitudinal position of the driver seat 1 and the recommended position line P is output to each of the seated-posture adjusting mechanism 3 and the floor lifting/lowering mechanism 7 to adjust the vertical position of the seat cushion 1a, and others. This provides an advantage of being able to adjust a driving posture of a driver in an easy and proper manner on the basis of the predetermined recommended position. Therefore, an eye point of the driver can be adjusted to lie on the proper line L to properly ensure forward visibility, and a ball region of a sole of the driver can be reliably brought into contact with the operation point 4a of the operation pedal 4 so as to properly ensure the controllability for the operation pedal 4, while the driver maintaining a comfortable seated posture.

For example, when a tall person T1 is seated in the driver seat 1, the seat cushion 1a of the driver seat 1 is set on the side of the rearmost position of the longitudinally movable range to allow an eye point I1 of the tall person T1 seated in the driver seat 1 to lie on the proper line L, as shown in FIG. 1, and the movable floor unit 6 is set on the side of the lowermost position to allow the tall person T1 to properly perform an operation of pressing the operation pedal 4 arranged in front of the driver seat 1, as shown in FIG. 7.

In this state, when a driver seated in the driver seat 1 is changed from the tall person T1 to a short person T4, such as a woman driver, and a value of body height of the short person T4 is input through the seat slide switch 91, the control unit 95 performs a control operation of actuating the seat-position adjusting mechanism 2 to move the driver seat 1 frontwardly along the recommended position line P, while lifting the seat cushion 1a, so as to allow an eye point I4 of the short person T4 to lie on the proper line L. Further, a driving force based on the movement of the diver seat 1 is transmitted to the lifting section of the floor lifting/lowering mechanism 7, and the movable floor unit 6 is lifted by the floor lifting/lowering mechanism 7.

Thus, the position of the driver seat 1 is automatically adjusted to allow the short person T4 who tends to have short arm and leg lengths as compared with the tall person T1, to properly grip a steering wheel, and the height position of the movable floor unit 6 is automatically adjusted to allow the short person T4 to place his/her foot on the operation pedal 4, such as an accelerator pedal or a brake pedal, and properly press the operation pedal 4. This provides an advantage of being able to properly maintain controllability for the steering wheel and the operation pedal 4 even if there is a difference in body size between respective drivers to be seated in the driver seat 1.

The driving posture adjusting apparatus according to the first embodiment is provided with the vertical-position adjusting switch 93 adapted to issue an instruction for actuating the drive motor 65 of the seated-posture adjusting mechanism 3 to selectively displace the seat cushion 1a of the driver seat 1 upwardly and downwardly. Thus, after performing the control operation of automatically adjusting the longitudinal position of the driver seat 93, the vertical position of the seat cushion 1a and others, based on an input signal through the seat slide switch 91, the vertical position of the seat cushion 1a is selectively displaced upwardly and downwardly based on the instruction from the vertical-position adjusting switch 93, so that the vertical position of the seat cushion 1a can be finely adjusted according to driver's preference and physical feature.

For example, if the short person T4 has a seated height less than that in an average body size of short persons, an eye point I4 of the short person T4 is more likely to be positioned closer to the proper line L when the seat cushion 1a of the driver seat 1 is set at a position slightly above a position corresponding to the recommended position line P. In this case, the vertical-position adjusting switch 93 can be operated in a direction for lifting to slightly lift the seat cushion 1a of the driver seat 1 so as to properly ensure forward visibility through a windshield. On the other hand, if the short person T4 has a seated height greater than that in the average body size, it is desirable to move the seat cushion 1a of the driver seat 1 to a position slightly below a position corresponding to the recommended position line P in order to allow an eye point I4 of the short person T4 to lie closer to the proper line L. In this case, the vertical-position adjusting switch 93 can be operated in a direction for lowering to slightly lower the seat cushion 1a of the driver seat 1, to obtain an advantage of being able to properly ensure the forward visibility.

The driving posture adjusting apparatus according to the first embodiment is further provided with the longitudinal-position adjusting switch 92 adapted to issue an instruction for actuating the drive motor 46 of the seat-position adjusting mechanism 2 to finely adjust the longitudinal position of the driver seat 1. Thus, for example, after performing the control operation based on the input signal through the seat slide switch 91, and the control operation based on the input signal through the vertical-position adjusting switch 93, the seat cushion 1a is slidingly displaced along the seat slide lower rails 41 based on an input signal through the longitudinal-position adjusting switch 92, so that the longitudinal position of the seat cushion 1a can be finely adjusted according to driver's preference and physical feature.

For example, if the short person T4 has a leg length greater than that in the average body size, controllability for the operation pedal 4 is more likely to be improved when the longitudinal position of the driver seat 1 is set at a position on a slightly rearward side relative to a normal position corresponding to the recommended position line P. Thus, the controllability for the operation pedal 4 can be more effectively improved by operating the longitudinal-position adjusting switch 92 in the direction for rearward movement, to slightly move the driver seat 1 rearwardly. On the other hand, if the short person T4 has a leg length less than that in the average body size, the controllability for the operation pedal 4 is more likely to be improved when the longitudinal position of the driver seat 1 is set at a position on a slightly frontward side relative to the normal position. In this case, the longitudinal-position adjusting switch 92 can be operated in the direction for frontward movement to slightly move the driver seat 1 frontwardly, so as to obtain an advantage of being able to effectively improve the controllability for the operation pedal 4.

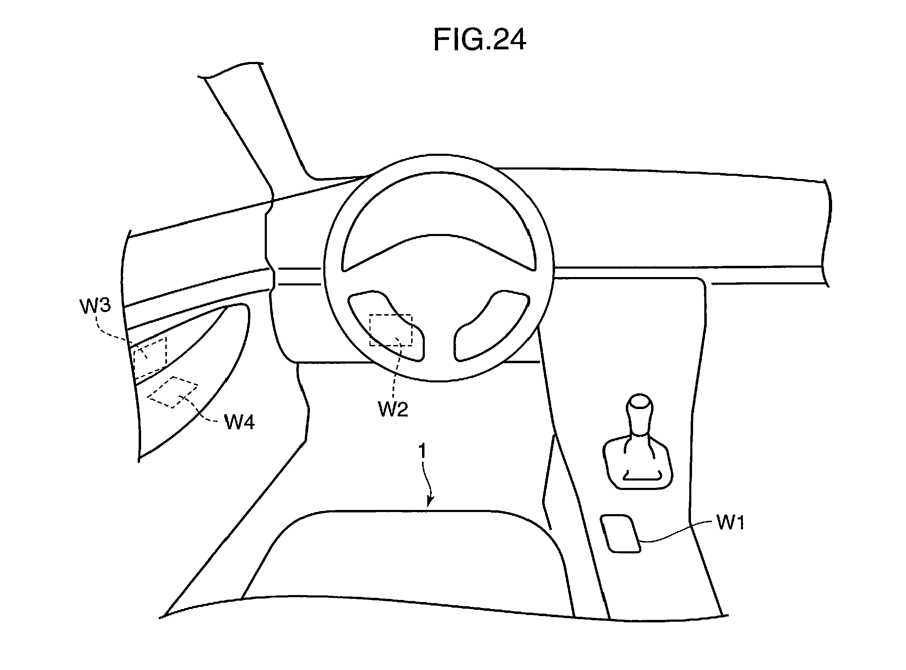

Preferably, a switch unit, such as the switch panel 96 having the seat slide switch 91, the longitudinal-position adjusting switch 92, the vertical-position adjusting switch 93 and the display unit 94, is installed in a location which allows a driver to manually operate each of the switches 91 to 93 without difficulties and accurately recognize a display of the display unit 94, in the passenger compartment. For example, as shown in FIG. 24, the switch unit, such as the switch panel 96, may be installed in a location W1 on a console arranged on a lateral side of the driver seat 1. This provides an advantage of being able to manually operate each of the switches 91 to 93 without difficulties, while viewing a display of the display unit 94.

Alternatively, the switch unit, such as the switch panel 96, may be installed in a location W2 on an instrument panel arranged in front of the driver seat 1, or a location W3 on a lateral surface of a side door, or a location W4 on an armrest. This provides an advantage of being able to manually operate each of the switches 91 to 93 without difficulties while viewing a display of the display unit 94, and prevent a passenger other than driver from checking the display of the display unit 94 and operating each of the switches 91 to 93. In order to prevent personal information from being acquired by others due to viewability of an input value of body height displayed on the display unit 94, it is desirable to darkly display an input value of body height on the display unit 94 or erase the display, when a given time has elapsed after the manual operation of the seat slide switch 91.

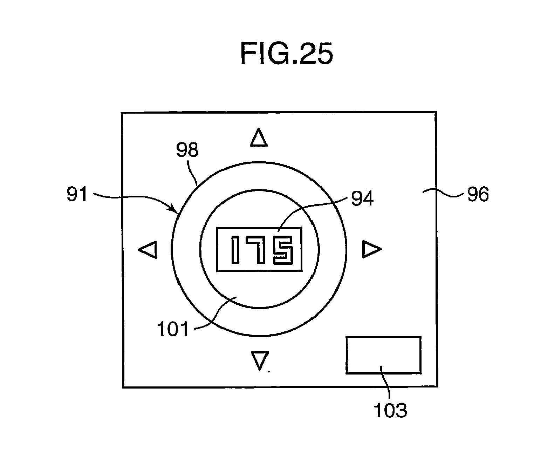

FIG. 25 shows a switch unit for use in a driving posture adjusting apparatus according to a second embodiment of the present invention. This switch unit comprises a reset switch 103 adapted to issue an instruction for resuming the control operation of adjusting the driving posture based on the recommended position, after completion of the fine adjustment operations based on the input signals through the longitudinal-position adjusting switch 92 and the vertical-position adjusting switch 93. In the driving posture adjusting apparatus according to the second embodiment, for example, when it becomes unable to determine a direction for adjusting the seat cushion 1a of the driver seat 1, due to a large deviation between the seat cushion 1a of the driver seat 1 and the recommended position line P, caused by the control operation of finely adjusting the vertical position of the seat cushion 1a of the driver seat 1 according to the input signal through vertical-position adjusting switch 93, and the control operation of finely adjusting the longitudinal position of the driver seat 1 according to the input signal through the longitudinal-position adjusting switch 92, or when or a driver is changed to another driver under a condition that the seat cushion 1a of the driver seat 1 is largely deviated from the recommended position line P, the reset switch 193 is manually operated to return the seat cushion 1a of the driver seat 1 onto the recommended position line P. This makes it possible to facilitate shifting to the control operation of adjusting the vertical position and the longitudinal position of the seat cushion 1a based on the recommended position line P.

The first embodiment has been described based on one example of a control operation configured such that the seated-posture adjusting mechanism 3 is actuated in response to the vertical-position adjusting switch 93 to finely adjust the vertical position and inclination angle of the seat cushion 1a and the reclining angle of the seat back 1b concurrently. Alternatively, the control operation may be configured such that three adjusting mechanisms are provided to finely adjust respective ones of the vertical position of the seat cushion 1a, the inclination angle of the seat cushion 1a and the reclining angle of the seat back 1b, according to the respective operations of three adjusting switches each adapted to issue an instruction for a respective ones of the fine adjustments thereof.

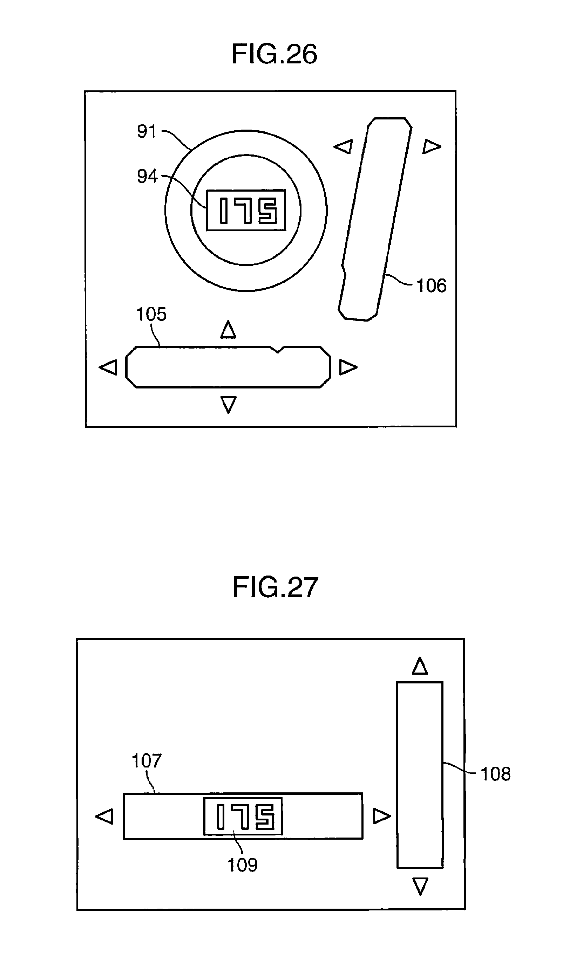

FIG. 26 shows a switch unit for use in a driving posture adjusting apparatus according to a third embodiment of the present invention. As shown in FIG. 26, the switch unit comprises a seat slide switch 91 comprised of a dial-type switch and adapted to allow a value of driver's body height to be input therethrough, a seat cushion switch 105 disposed on a lower (in FIG. 26) side relative to the seat slide switch 91, and an reclining-angle adjusting switch 106 disposed on a lateral (in FIG. 26) side of the seat slide switch 91. The seat cushion switch 105 is comprised of a toggle switch or the like and adapted to issue an instruction for selectively moving the seat cushion 1a of the driver seat 1 frontwardly and rearwardly and selectively displacing the seat cushion 1a of the driver seat 1 upwardly and downwardly. The reclining-angle adjusting switch 106 is comprised of a toggle switch or the like and adapted to issue an instruction for finely adjusting a reclining angle of the seat back 1b. In the driving posture adjusting apparatus according to the third embodiment this case, the seat back 1b may be displaced in a reclining manner by actuating a seated-posture adjusting mechanism which is comprised of a reclining-angle adjusting mechanism adapted to finely adjust the reclining angle of the seat back 1b separately, according to an instruction signal input through the reclining-angle adjusting switch 106. This provides an advantage of being able to finely adjust a reclining angle of an upper body of a driver seated in a driver seat 1 according to his/her preference and body size.

FIG. 27 shows a switch unit for use in a driving posture adjusting apparatus according to a fourth embodiment of the present invention. The switch unit in the fourth embodiment comprises a longitudinal-position adjusting switch 107 comprised of a toggle switch, a slide switch or the like, and adapted to issue an instruction for actuating the aforementioned seat-position adjusting mechanism 2 to selectively move the seat cushion frontwardly and rearwardly, and a vertical-position adjusting switch 108 adapted to issue an instruction for selectively displace the seat cushion 1a of the driver seat 1 upwardly and downwardly. In addition, the longitudinal-position adjusting switch 107 also serves as a body-height input switch adapted to allow a value of body height to be input therethrough, and display unit 109 comprised of a liquid-crystal display or the like is provided on the longitudinal-position adjusting switch 107.

In the driving posture adjusting apparatus according to the fourth embodiment, when the longitudinal-position adjusting switch 107 is manually operated in a direction for frontward or rearward movement, an input value of body height displayed on the display unit 109 is changed. Then, a control operation of moving the driver seat 1 is performed based on the changed input value of body height, and the aforementioned recommended position line P. After this control operation, the vertical position of the seat cushion 1a can be finely adjusted by manually operating the vertical-position adjusting switch 108. Further, the longitudinal position of the driver seat 1 can be finely adjusted by manually operating the longitudinal-position adjusting switch 107 in the direction for frontward or rearward movement. In the above embodiments, the display unit 94, 109 adapted to display a value of body height input through the seat slide switch 91 or the longitudinal-position adjusting switch 107 makes it possible to allow a passenger to readily recognize that the vehicle has a function of automatically adjusting the longitudinal position etc., of the driver seat 1 according to the input signal through the seat slide switch 91 etc., and change an input value of body height based on a content of display on the display unit 94, 109 in an easy and proper manner.

Particularly, the display unit 94 disposed adjacent to the installation area of the seat slide switch 91 as in the first embodiment illustrated in FIG. 18, or the display unit 109 disposed in the installation area of a seat slide switch comprised of the longitudinal-position adjusting switch 107 as in the fourth embodiment illustrated in FIG. 27, has an advantage of being able to effectively prevent occurrence of an undesirable situation where a passenger operates the seat slide switch 91 or the longitudinal-position adjusting switch 107 to adjust the longitudinal direction of the driver seat 1 without recognizing that the vehicle has a function of automatically adjusting the longitudinal position etc., of the driver seat 1, on the basis of the recommended position, i.e., a driver adjusts the longitudinal direction of the driver seat 1 irrespective of his/her body size, such as body height, while relying only on his/her senses.

In place of the display unit 94 or 109 disposed in or in the vicinity of the installation area of the seat slide switch 91 or the longitudinal-position adjusting switch 107 as in the first and fourth embodiments, the display unit 94 or 109 may be disposed in a location different from the installation area of the seat slide switch 91 or the longitudinal-position adjusting switch 107, in the passenger compartment. In this case, the display unit 94 or 109 is preferably designed to, in response to input of a value of driver's body height through manual operation of the seat slide switch 91 or the longitudinal-position adjusting switch 107, light up or blink a display of the input value of deriver's body height to inform the operator of a fact that the longitudinal position etc., of the driver seat 1 is automatically adjusted according to an input signal of the seat slide switch 91 or the longitudinal-position adjusting switch 107.

In the first embodiment, if it is determined that the vehicle is a running state, at a time when the seat slide switch 91 is manually turned on, information about error is displayer on the display unit 94 (see Step S3 in FIG. 20) to inform the operator of a fact that a driving posture adjusting control operation is in an inhibited state, and then the routine is returned, so that the control operation of adjusting the position of the driver seat 1 according to the manual operation of the seat slide switch 91 is inhibited. This provides an advantage of being able to effectively prevent occurrence of an undesirable situation where the driver seat 1 is accidentally moved in the longitudinal direction during running of the vehicle to bring passenger's discomfort.

In place of the control operation in the first embodiment, which is configured to inhibit the control operation of adjusting the longitudinal position etc., of the driver seat 1 according to the manual operation of the seat slide switch 91 during running of the vehicle, a longitudinally movable distance of the driver seat 1 may be limited to 5 cm or less during running of the vehicle to suppress occurrence of passenger's discomfort. Alternatively, a hold switch adapted to inhibit a manual operation of the seat slide switch 91 may be provided in such a manner that the control operation of adjusting the longitudinal position etc., of the driver seat 1 according to the manual operation of the seat slide switch 91 is disenabled, unless an inhibited state of the hold switch is released, so as to effectively suppress occurrence of an undesirable situation where the seat slide switch 91 is erroneously operated during running of the vehicle to cause an accidental longitudinal movement of the driver seat 1.

Further, display unit may be provided to display a current position of the driver seat. For example, information about a position of the seat cushion 1a of the driver seat 1 relative to the recommended position line P, as shown in FIGS. 22 and 23, may be display on a display unit of a navigation apparatus mounted to the instrument panel of the vehicle. This makes it possible to allow a passenger to readily recognize that that the vehicle has a function of automatically adjusting the longitudinal position etc., of the driver seat 1 in association with an input operation of the seat slide switch 91 etc., and readily and properly perform the control operation of automatically adjusting the longitudinal position etc., of the driver seat 1 while accurately figuring out a current position of the seat cushion 1a based on the displayed information.

Furthermore, information about a procedure of the following required operations: the control operation of automatically adjusting the longitudinal position etc., of the driver seat 1 according to the input signals through the seat slide switch 91 etc., the operation of finely adjusting the vertical position of the seat cushion 1a using the vertical-position adjusting switch 93, according to driver's preference and physical feature, and the operation of finely adjusting the longitudinal position of the driver seat 1 using the longitudinal-position adjusting switch 92, may be displayed on display unit comprised of the display unit of the navigation apparatus to allow a driver to readily recognize an operational procedure for the switches 91 to 93, etc.

In place of the structure in the first embodiment, which is designed to transmit a driving force of the seat-position adjusting mechanism 2 to the controllability adjusting mechanism comprised of the floor lifting/lowering mechanism 7 via the pull cable 28 to lift/lower the movable floor unit 6 automatically in conjunction with the longitudinal movement of the driver seat 1, the vertical position of the movable floor unit 6 may be adjusted mechanically independently, in such a manner that a drive motor for lifting/lowering the movable floor unit 6 is provided in the floor lifting/lowering mechanism 7, and controlled by an output signal from the control unit 95, as in the following driving posture adjusting apparatus according to a fifth embodiment of the present invention.

Specifically, in the driving posture adjusting apparatus according to the fifth embodiment, the longitudinal position of the driver seat 1, and the vertical position and inclination angle of the seat cushion 1a, are set up in correlation with a value of driver's body height input from the seat slide switch 91 (or the longitudinal-position adjusting switch 107), in the same manner as that in the first embodiment. Then, based on the setup the vertical position and inclination angle of the seat cushion 1a, the control unit 95 sets up the vertical position of the movable floor unit 6, and outputs a control signal corresponding to the setup vertical position of the movable floor unit 6 to the floor lifting/lowering mechanism 7 to automatically adjust the vertical position of the movable floor unit 6 based on an input value of body height. Further, a floor adjusting switch adapted to issue an instruction for actuating the drive motor of the floor lifting/lowering mechanism 7 is provided. In the above manner, the vertical position of the movable floor unit 6 may be adjusted mechanically independently.

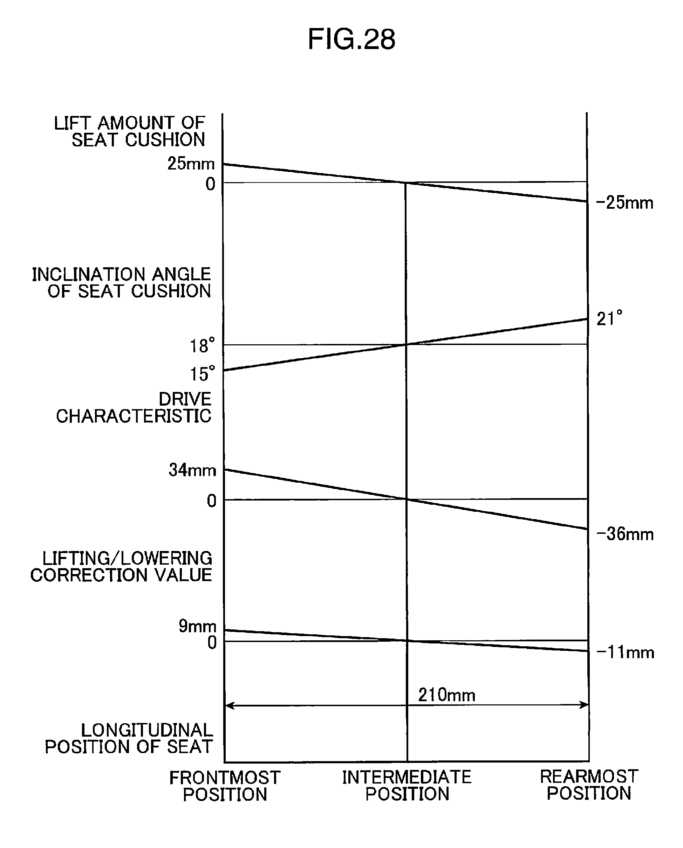

For example, the seat-position adjusting mechanism 2 is designed such that, when the seat cushion 1a of the driver seat 1 having a longitudinally movable range of 210 mm as shown in FIG. 28 is set at an approximately center of the longitudinally movable range (i.e., intermediate position), and an average-height person T2 having an average body size, such as a body height of about 168 cm, is seated in the driver seat in a proper posture, as indicated by the solid line in FIG. 29, an eye point I2 of the average-height person T2 lies on the proper line L. For example, a drive characteristic of the seat cushion 1a are set such that the seat cushion 1a is moved frontwardly from the intermediate position of the longitudinally movable range by about 105 mm, and simultaneously moved upwardly by about 25 mm, so as to allow a short person T4 having a body height of about 150 cm to be seated in the same posture (proper posture) as that of the average-height person T2, as indicated by the two-dot chain line in FIG. 29. Thus, an eye point I4, a waist a2 and a heel a3 of the short person T4 seated in the seat cushion 1a in the proper posture are moved in parallel to each other, as indicated by the arrow M in FIG. 29, to have a lift amount of 25 mm, and a ball region a4 of a sole of the short person T4 is moved to a position causing contact with the operation point 4a of the operation pedal 4.

A "proper posture" of a passenger seated in the driver seat 1 means a seated posture capable of maintaining a conformable state for a long period of time and suitable for a pedal operation. Specifically, an ankle angle θ1 is 90°; a knee angle θ2 is 125°; and a bent angle θ5 between a thigh region and an upper body extending from a sidebone to a shoulder is about 95°. Further, according to ergonomics tests, it has been verified that an optimal thigh angle θ3 between a thigh region and a horizontal line is a sum of an inclination angle α of the seat cushion 1a and about 1.5°. A movement locus of the ball region a4 according to the longitudinal movement and upward/downward movement of the seat cushion 1a can be derived based on a joint angle, lengths of a thigh region and a below knee region, etc., of each passenger in the proper posture, by calculation or simulation.

That is, in an example illustrated in FIG. 29, if a movement characteristic of the seat cushion 1a is set such that the seat cushion 1a is moved frontwardly from the approximately intermediate position of the longitudinally movable range by about 105 mm, and simultaneously moved upwardly by about 25 mm, respective ball regions a4, b4 of the short person T4 and the average-height person T2 can be brought into contact with the operation point 4a of the operation pedal 4 while maintaining their seated postures in the proper posture.

The lift amount (25 mm) of the seat cushion 1a is less than an average of eye-point differences between the average-height person T2 and the short person T4, i.e., an average (about 90 mm) of vertical differences between the eye point I2 and the I4, which is equivalent to a difference in seated height. Thus, even considering that a height position of a proper eye point is lowered by about 20 mm due to a frontward movement of the eye point I4 of the short person T4 and an inclination of the proper line L, the eye point I4 of the short person T4 will be located below the proper line L, unless a seating-surface angle of the seat cushion 1a, i.e., the inclination angle α of the seat cushion 1a relative to a horizontal line, is changed to rotate an upper body of the short person T4. The lowering amount (about 20 mm) in height position of the proper eye point is calculated by multiplying a value (145 mm) as a sum of the frontward movement distance (105 mm) of the driver seat 1 and the longitudinal displacement (about 40 mm) of the eye point I4 caused by rotation of the upper body, by a tangent of an inclination angle of the proper line L: tan 8° (= 0.140).

Thus, the rear end of the seat cushion 1a is lifted by the seated-posture adjusting mechanism 3, as moving the seat cushion 1a frontwardly from the intermediate position by about 105 mm, so that the inclination angle α (= thigh angle θ3 + 1.5°) of the seat cushion 1a is changed, for example, from 8° to 15° to rotate the upper body of the short person T4 about a pivotal support point 4b or the operation point 4a of the operation pedal 4 in such a manner as to be upstandingly moved. In this manner, the eye point of the short person T4 is moved upwardly to lie on the proper line L without changing a contact point of the sole with respect to the operation pedal 4.

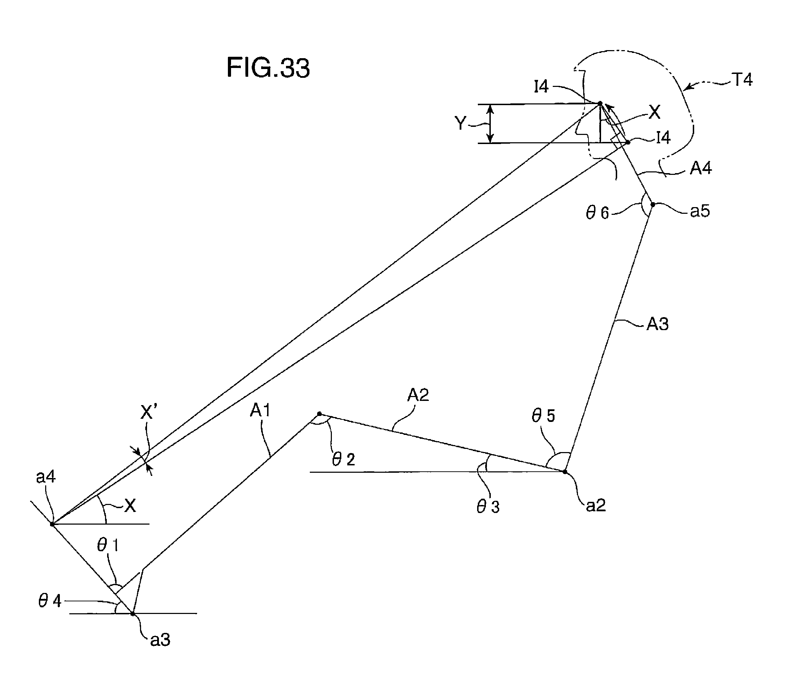

As shown in FIG. 33, an upward displacement Y of the eye point I4 caused by the rotation of the upper body of the short person T4 is calculated by multiplying a distance (in an example illustrated in FIG. 33, about 1040 mm) between the ball region a4 in contact with the operation point 4a of the operation pedal 4 and the eye point I4, by sin X' · cos X, wherein X is an inclination angle (about 34°) of a segment connecting between the ball region a4 and the eye point I4, relative to a horizontal line, and X' is an amount of change in the inclination angle X caused by the rotation of the upper body of the short person T4, i.e., a value (3°) corresponding to a change in angle of the seat cushion 1a.

The upward displacement Y of the eye point I4 caused by the rotation of the upper body of the short person T4 is specifically calculated as about 45 mm. A sum of upward displacements of the eye point I4 obtained by adding this value, a lowering amount (about 20 mm) of the eye point I4 caused by the frontward movement of the driver seat 1 and a frontwardly downward inclination of the proper line L, and the lift amount (25 cm) of the seat cushion 1a, is a value (about 90 mm) approximately corresponding to the average of eye-point differences between the average-height person T2 and the short person T4. Thus, the seat cushion 1a is lifted as moving the seat cushion 1a frontwardly, while rotating the upper body of the short person T4, so that the eye point I4 of the short person T4 can be moved to lie on the proper line L while allowing the ball region a4 to be in contact with the operation point 4a of the operation pedal 4.

As shown in FIG. 33, the above calculation of the upward displacement Y of the eye point I4 caused by the rotation of the upper body of the short person T4 was performed on a assumption that the short person T4 has the following body size: a length of a below knee region A1 = 41 cm; a length of a thigh region A2 = 38 cm; a length of an upper body A3 between a waist a2 and a shoulder a5 = 42 cm; and a length of a neck region A4 between the shoulder a5 and the eye point I4 = 17 cm, and the short person T4 is seated in a posture (proper posture) set at the following angles: an ankle angle θ1 = 90°; a knee angle θ2 = 125°; a thigh angle θ3 = 16.5°; a bent angle θ5 between the upper body A3 and the thigh region A2 = 95°; and a bent angle θ6 between the upper body A3 and the neck region A4 = 135°.

Along with a swing displacement of the seat cushion 1a, the upper body of the short person T4 is rotated together with the seat cushion 1a. Thus, the upper body of the short person T4 cannot be rotated about the operation point 4a of the operation pedal 4 or the like only by the swing displacement of the seat cushion 1a. In order to create an apparent-rotation of the upper body of the short person T4 about the operation point 4a of the operation pedal 4 or the like, it is necessary to move the seat cushion 1a frontwardly and upwardly along the seat slide lower rails 41 while swingingly displacing the seat cushion 1a. This allows a final frontward movement distance of the seat cushion 1a to become greater than the above value (105 mm).

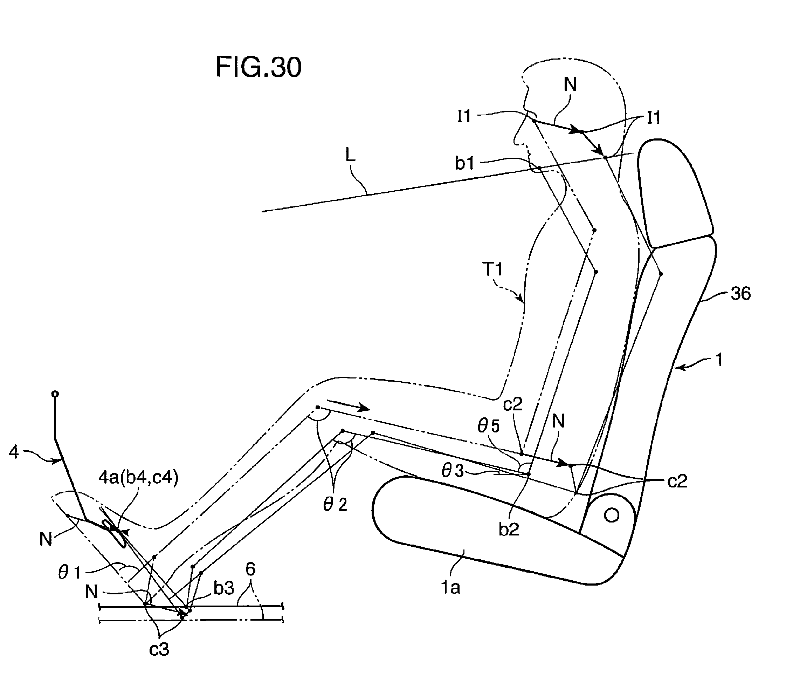

For example, as indicated by the two-dot chain line in FIG. 30, if a movement characteristic of the seat cushion 1a is set such that, when a tall person T1 having a body length of about 188 cm is seated in the driver seat 1 in a proper posture, the seat cushion 1a is moved rearwardly from the intermediate position of the longitudinally movable range by about 105 mm, and simultaneously the seat cushion is moved downwardly by about 25 mm, an eye point I1, a waist c2 and a heel c3 of the tall person T1 seated in the seat cushion 1a in the proper posture are moved in parallel to each other, as indicated by the arrow N in FIG. 30, to have a lowering amount of 25 mm, and a ball region c4 of the short person T4 is moved to a position causing contact with the operation point 4a of the operation pedal 4.

The lowering amount (25 mm) of the seat cushion 1a, the eye point I1 and the waist c2 is less than an average of eye-point differences (100 mm) between the average-height person T2 and the tall person T1. Thus, even considering that a height position of a proper eye point is moved upwardly by about 20 mm due to a rearward movement of the eye point I1 of the tall person T1 and an inclination of the proper line L, the eye point I1 of the tall person T1 will be located above the proper line L, unless the seating-surface angle of the seat cushion 1a, is changed.

Thus, the rear end of the seat cushion 1a is lowered by the seated-posture adjusting mechanism 3, as moving the seat cushion 1a rearwardly from the intermediate position by about 105 mm, so that the inclination angle of the seat cushion 1a is changed, for example, from 18 to 21° to rotate the upper body of the tall person T1 about the operation point 4a of the operation pedal 4 or the like in such a manner as to be rearwardly inclined. In this manner, the eye point of the tall person T1 is moved downwardly to lie on the proper line L.

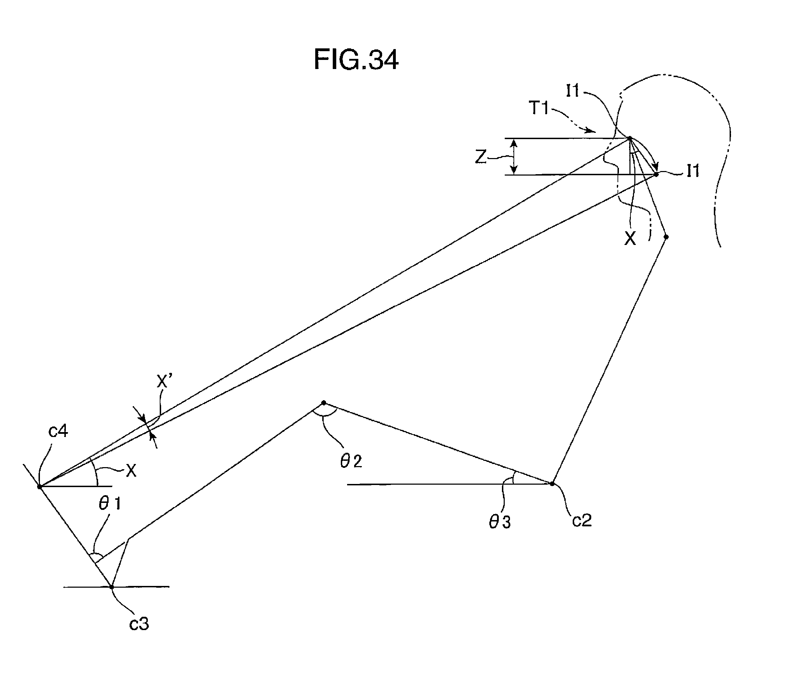

As shown in FIG. 34, a downward displacement Z of the eye point I1 caused by the rotation of the upper body of the tall person T1 is calculated by multiplying a distance between the ball region c4 in contact with the operation point 4a of the operation pedal 4 and the eye point I1, by tan X' · cos X, wherein X is an inclination angle (about 34°) of a segment connecting between the ball region c4 and the eye point I1, relative to a horizontal line, and X' is an amount (3°) of change in the inclination angle X caused by the rotation of the upper body of the tall person T1.

On an assumption that a difference in body size (other than body height) between the tall person T1 and the short person T4 a is changed in proportion to a difference in body height, the distance between the ball region c4 and the eye point I1 is specifically calculated as about 1300 mm, and the downward displacement Z of the eye point I1 caused by the rotation of the upper body of the tall person T1 is specifically calculated as about 56 mm. A sum (about 101 mm) of downward displacements of the eye point I1 obtained by adding this value, an lift amount (about 20 mm) of the eye point I1 caused by the rearward movement of the driver seat 1 and a frontwardly downward inclination of the proper line L, and the lowering amount (25 cm) of the seat cushion 1a, is approximately equal to a value (about 100 mm) approximately corresponding to the average of eye-point differences between the average-height person T2 and the tall person T1. Thus, the seat cushion 1a is lowered as moving the seat cushion 1a rearwardly, while rotating the upper body of the tall person T1, so that the eye point I1 of the tall person T1 can be moved to lie on the proper line L while allowing the ball region c4 to be in contact with the operation point 4a of the operation pedal 4. As with the above case, in order to create an apparent-rotation of the upper body of the tall person T1 about the operation point 4a of the operation pedal 4 or the like, it is necessary to move the seat cushion 1a rearwardly and downwardly along the seat slide lower rails 41 while swingingly displacing the seat cushion 1a.

For example, when the short person T4 is seated in the driver seat 1, and the driver seat 1 is moved frontwardly by the seat-position adjusting mechanism 2, an operation of displacing the movable floor unit 6 to an uppermost position as shown in FIG. 4 is performed by the floor lifting/lowering mechanism 7, in conjunction with the frontward movement of the driver seat1.

As shown in FIG. 28, the operation of lifting the movable floor unit 6 by the floor lifting/lowering mechanism 7 is configured to be performed based on a drive characteristic set by a lift amount of the seat cushion 1a corresponding to the frontward movement of the driver seat 1, and a lifting/lowering correction value corresponding to a change in the inclination of the seat cushion 1a.

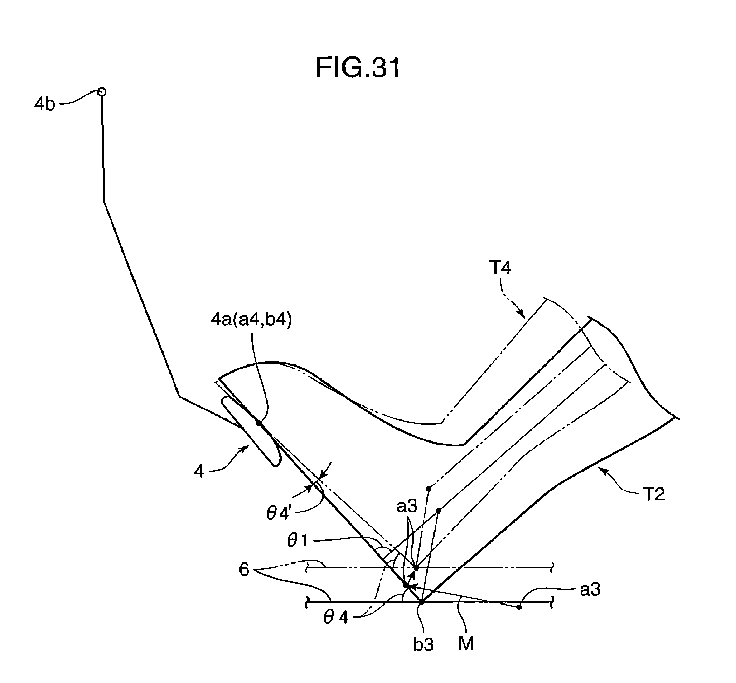

Specifically, as shown in FIG. 29, when a passenger to be seated in the driver seat 1 is changed from the average-height person T2 to the short person T4, depending on a difference in body size between the two persons, the seat cushion 1a is moved frontwardly from the intermediate position of the longitudinally movable range by about 105 mm, while lifting the seat cushion 1a by about 25 mm. In a driving posture adjusting apparatus designed to change the inclination angle from 8° to 15°, in conjunction with the above movement, the heel a3 of the short person T4 is moved in parallel to the seat cushion 1a, as indicated by the arrow M in FIG. 31.

Then, as the inclination angle of the seat cushion 1a is changed from 18° to 15°, and the thigh angle θ3 is changed from 16.5 to 13.5°, an inclination angle θ4 of the sole of the short person T4 relative to a horizontal line is changed from 51.5° to 48.5°, and correspondingly the heel a3 of the short parson T4 is moved further upwardly. Thus, an upward displacement of the heel a3 can be derived based on a drive characteristic obtained by adding a lift amount of the seat cushion 1a, and a lifting/lowering correction value corresponding to a change in the inclination of the seat cushion 1a.

An upward displacement (lifting/lowering correction value) of the heel a3 caused by a change in the sole inclination angle θ4 is calculated by mortifying a pressing height of the operation pedal 4, i.e., a distance between the heel a3 and the ball region a4, by sin (θ4'). cos (θ4), wherein θ4' is an amount of change in the sole inclination angle θ4 corresponding to a change in the inclination angle of the seat cushion 1a. For example, when the sole inclination angle θ4 is set at 51.5°, given that a sole size of the short person T4 is 230 mm, and the distance between the heel and the ball region a4 is 45 mm, the pressing height of the operation pedal 4 is about 185 mm, and the amount θ4' of change in the sole inclination angle θ4 is 3°. Thus, a lifting/lowering correction value for the short person T4 is about 9 mm.

For example, as shown in FIG. 29, when the short person T4 is seated in the driver seat 1 set at the intermediate position, the heel a3 of the short person T4 in a state before movement of the seat cushion 1a should be located at a position slightly below the heel b3 of the average-height person T2 seated in the driver seat 1 However, if a difference therebetween is significantly small, it is ignored and it is assumed that the heels a3, b3 are the same in height position. Thus, the drive characteristic representing a vertical displacement of the movable floor unit 6 by the floor lifting/lowering mechanism 7 can be set based on the lift amount of the seat cushion 1a when the seat cushion 1a is moved frontwardly from the intermediate position of the longitudinally movable range by 105 mm, and the lifting/lowering correction value corresponding to the sole inclination angle θ4 to be changed in conjunction with the operation of changing the inclination angle of the seat cushion 1a from 18° to 15°. Then, the driving posture adjusting apparatus is designed to allow the movable floor unit 6 to be driven by the floor lifting/lowering mechanism 7, based on the drive characteristic of the movable floor unit 6. This makes it possible to allow an optimal position (ball position a4, b4) of a sole of a foot to be accurately brought into contact with the operation point 4a of the operation pedal 4 in a state when a heel (a3, b3) of the foot is placed on the movable floor unit 6, even if a body size of a passenger to be seated in the driver seat 1 varies, so as to adequately maintain controllability relative to the operation pedal 4.

When the heel a3 of the short person T4 seated in the driver seat 1 set at the intermediate position in a state before movement of the seat cushion 1a, and the heel b3 of the average-height person T2 seated in the driver seat 1, are approximately the same in height position, as described above, an upward displacement of the movable floor unit 6 is a sum of an upward displacement thereof corresponding to a frontward movement of the seat cushion 1a, and the lifting/lowering correction value. That is, the upward displacement of the movable floor unit 6 is maintained in a value greater than the upward displacement of the movable floor unit 6 corresponding to the frontward movement of the seat cushion 1a. Thus, the drive characteristic of the movable floor unit 6 is configured to allow a vertical distance between the seat cushion 1a and the movable floor unit 6 located below the seat cushion 1a to be reduced along with a frontward movement of the driver seat 1. In other words, the lifting/lowering correction value represents an amount of change in the vertical distance between the seat cushion 1a and the movable floor unit 6, which is changed along with the frontward movement of the driver seat 1. This lifting/lowering correction value is set to be linearly changed along with the frontward movement of the driver seat 1. It is understood that, if a difference in height position between the heel a3 of the short person T4 and the heel c3 of the average-height person T1 is unignorably large, a downward displacement of the movable floor unit 6 is set in consideration with the difference in height position.

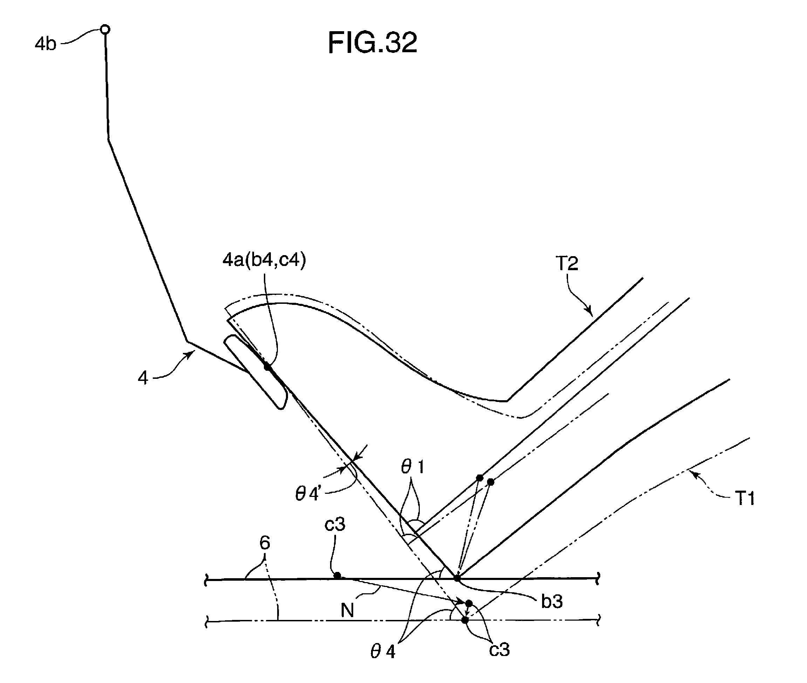

As shown in FIG. 30, when a passenger to be seated in the driver seat 1 is changed from the average-height person T2 to the tall person T1, the driver seat 1 is moved rearwardly by about 105 mm, the heel c3 of the tall person T1 is moved rearwardly and downwardly in parallel to rearward movement and downward movement of the seat cushion 1a, as indicated by the arrow N in FIG. 32. Then, as the inclination angle of the seat cushion 1a is changed, for example, from 18° to 21°, an inclination angle θ4 of the sole of the tall person T1 relative to a horizontal line is changed from 51.5° to 54.5°. Correspondingly to the change in the sole inclination angle θ4, the heel c3 of the tall parson T1 is moved further downwardly. Thus, a downward displacement of the heel c3 can be derived based on a lowering amount of the heel c3 corresponding to the downward movement of the seat cushion 1a, and a lifting/lowering correction value corresponding to a change in the inclination of the seat cushion 1a.

A downward displacement (lifting/lowering correction value) of the heel c3 caused by a change in the sole inclination angle θ4 is calculated by mortifying a pressing height of the operation pedal 4, i.e., a distance between the heel c3 and the ball region c4 of the sole in contact with the operation point 4a, by sin (θ4') · cos (θ4). For example, in an example illustrated in FIG. 32, where the sole inclination angle θ4 is set at 51.5°, given that a sole size of the tall person T1 is 290 mm, and the distance between the heel and the ball region c4 is 55 mm, the pressing height of the operation pedal 4 is about 235 mm, and the amount θ4' of change in the sole inclination angle θ4 is 3°, in the tall person T1. Thus, a lifting/lowering correction value for the tall person T1 is about - 11 mm.

For example, as shown in FIG. 30, if the heel c3 of the tall person T1 seated in the driver seat 1 set at the intermediate position in a state before movement of the seat cushion 1a, and the heel b3 of the average-height person T2 seated in the driver seat 1, are approximately the same in height, a drive characteristic of the movable floor unit 6 can be derived by adding the lowering amount of the seat cushion 1a when the seat cushion 1a is moved rearwardly from the intermediate position of the longitudinally movable range by 105 mm, and the lifting/lowering correction value corresponding to the sole inclination angle θ4 to be changed in conjunction with the operation of changing the inclination angle of the seat cushion 1a from 18° to 21°, and a difference between the heels b3, c3. Then, the driving posture adjusting apparatus is designed to allow the movable floor unit 6 to be divined by the floor lifting/lowering mechanism 7, based on the drive characteristic of the movable floor unit 6. This makes it possible to allow an optimal position (ball position b4, c4) of a sole of a foot to be accurately brought into contact with the operation point 4a of the operation pedal 4 in a state when a heel (b3, c3) of the foot is placed on the movable floor unit 6, even if a body size of a passenger to be seated in the driver seat 1 varies, so as to adequately maintain controllability relative to the operation pedal 4.

When the heel c3 of the tall person T1 seated in the driver seat 1 set at the intermediate position in a state before movement of the seat cushion 1a, and the heel b3 of the average-height person T2 seated in the driver seat 1, are approximately the same in height position, as described above, a downward displacement of the movable floor unit 6 is a sum of a downward displacement thereof corresponding to a rearward movement of the seat cushion 1a, and the lifting/lowering correction value. That is, the downward displacement of the movable floor unit 6 is maintained in a value greater than the downward displacement of the movable floor unit 6 corresponding to the rearward movement of the seat cushion 1a. Thus, the drive characteristic of the movable floor unit 6 is configured to allow a vertical distance between the seat cushion 1a and the movable floor unit 6 located below the seat cushion 1a to be increased along with a rearward movement of the driver seat 1. The lifting/lowering correction value represents an amount of change in the vertical distance between the seat cushion 1a and the movable floor unit 6, which is changed along with the rearward movement of the driver seat 1. This lifting/lowering correction value is set to be linearly changed along with the rearward movement of the driver seat 1.

As above, in the driving posture adjusting apparatus according to the fifth embodiment which comprises, mechanically independently, the controllability adjusting mechanism comprised of the floor lifting/lowering mechanism 7 adapted to lift/lower the movable floor unit 6 located under feet of a driver, the driver seat 1 is moved in the longitudinal direction according to an input signal of the seat slide switch 91, and the vertical position and inclination angle of the seat cushion 1a are adjusted in correlation with the longitudinal position of the driver seat. Further, the vertical position of the movable floor unit 6 is set up based on the vertical position and inclination angle of the seat cushion 1a, and a control signal corresponding to the setup value is output from the control unit 95 to the drive motor of the floor lifting/lowering mechanism 7 and others to selectively displace the movable floor unit 6 upwardly and downwardly. This provides an advantages of being able to properly ensure a seated posture and operational controllability relative to the operation pedal 4, even if a body size of a driver varies, and actuate only the movable floor unit 6 according to a switch operation of a driver to adjust operational controllability relative to the operation pedal 4 according to driver's preference or the like.

The above embodiment has been described based on one example where the movable floor unit 6 located under feet of a driver is selectively moved upwardly and downwardly through the controllability adjusting mechanism comprised of the floor lifting/lowering mechanism 7, to improve operational controllability of a driver relative to the operation pedal 4. Alternatively, the driving posture adjusting apparatus of the present invention may have a controllability adjusting mechanism designed to provide enhanced operational controllability relative to a steering wheel or shift lever to be operated by a driver.

Features and advantages of the present invention described based on the above embodiments will be summarized as follows.

The present invention provides a driving posture adjusting apparatus for a vehicle, including: a seat-position adjusting mechanism adapted to move a seat cushion of a driver seat in a longitudinal direction of a vehicle body so as to adjust a longitudinal position of the driver seat; a seated-posture adjusting mechanism adapted to adjust a seated posture of a driver seated in the driver seat; and a controllability adjusting mechanism adapted to adjust controllability for an operation section to be operated by the driver. The driving-posture adjusting apparatus is characterized by comprising: a seat slide switch adapted to issue an instruction for actuating the seat-position adjusting mechanism to move the seat cushion of the driver seat in the longitudinal direction; and control unit operable to actuate the seated-posture adjusting mechanism and the controllability adjusting mechanism, in correlation with the longitudinal position of the driver seat adjusted according to an input signal through the seat slide switch, so as to obtain a driving posture corresponding to a predetermined recommended position.

In the driving posture adjusting apparatus of the present invention, the seat cushion of the driver seat is moved in the longitudinal direction by the seat-position adjusting mechanism according to an input signal through the seat slide switch, and a control signal based on a longitudinal position of the driver seat and the predetermined recommended position is output to the seated-posture adjusting mechanism and the controllability adjusting mechanism to adjust a vertical position of the seat cushion, and others. This provides an advantage of being able to adjust a driving posture of a driver in an easy and proper manner depending on a body size of the driver. Therefore, an eye point of the driver can be adjusted to lie on a proper line to properly ensure forward visibility, and a ball region of a sole can be reliably brought into contact with an operation point of the operation section, such as an operation pedal, to properly ensure operational controllability relative to the operation section, while allowing the driver to be seated in the driver seat in a comfortable posture.

Specifically, drivers having different body heights and arm/leg lengths try to adjust a longitudinal position of a driver seat, vertical position of a seat cushion, a reclining angle of a seat back, a height of a floor under the driver's feet and others, individually, to grip a steering wheel in a proper state, and obtain a comfortable joint angle during pressing an operation pedal and adequate eye point. In developments for such demand, automobile manufactures would take steps of setting a recommended posture for each driver's body size, and figure out an adjustment value optimal to the recommended posture on mechanism-by-mechanism in order to design each of the above adjusting mechanism (adjustment range). In reality, it is difficult for drivers to reach a combination of the optimal adjustment values through a trial and error process, and thereby even if a vehicle has a potential to offer a recommended posture, it will be insignificant to be pleasurable. The inventor of this application conceived an idea of providing an apparatus capable of actuating a plurality of adjusting mechanism using a single switch to automatically achieve driving postures recommended for respective drivers. As such a adjusting switch, the present invention employs a seat slide switch strongly associated with body size as a major factor in estimating body size of each driver to determine the posture and adapted to allow drivers to be intuitively operated and control a longitudinal position of a driver seat.

Preferably, in the driving posture adjusting apparatus of the present invention, the seat slide switch is adapted to allow a value of the driver's body height to be input therethrough as the input signal so as to cause the seat cushion of the driver seat to be moved in the longitudinal direction according to the input value of driver's body height, and wherein the driving posture adjusting apparatus further comprises display unit provided in or in a vicinity of the seat slide switch to display the input value of body height.

According to this feature, when a value of body height as a basis for specifying a body size of a driver is input through the seat slide switch, a control signal set based on an input value of body height is output to the seat-position adjusting mechanism and the seated-posture adjusting mechanism to adjust a position of the driver seat. Thus, a driving posture of the driver can be adjusted in conformity to the body size in an easy and proper manner. Further, the display is provided to display the value of body height input through the seat slide switch. This makes it possible to allow a passenger to readily recognize that the vehicle has a function of automatically adjusting the longitudinal position etc., of the driver seat according to the input value of body height, and change an input value of body height based on a content of display on the display unit in an easy and proper manner.

Preferably, the driving posture adjusting apparatus of the present invention further comprises a vertical-position adjusting switch adapted to issue an instruction for actuating the seated-posture adjusting mechanism to selectively displace the seat cushion of the driver seat upwardly and downwardly.

According to this feature, after performing a control operation based on the input signal through the seat slide switch, the seat cushion of the driver seat is selectively displaced upwardly and downwardly based on an input signal of the vertical-position adjusting switch, so that a height position of the seat cushion can be finely adjusted according to driver's preference and physical feature.

Preferably, the above driving posture adjusting apparatus further comprises a reset switch adapted to issue an instruction for resuming the control operation of adjusting the driving posture based on the recommended position.

According to this feature, when it becomes unable to determine a direction for adjusting the seat cushion of the driver seat, due to a large deviation between the seat cushion of the driver seat and the recommended position, caused by a control operation of finely adjusting the vertical position of the seat cushion of the driver seat according to an input signal through vertical-position adjusting switch, the reset switch is manually operated to return the seat cushion of the driver seat onto the recommended position. This makes it possible to facilitate shifting to the control operation of adjusting the vertical position and the longitudinal position of the seat cushion based on the recommended position.

Preferably, the driving posture adjusting apparatus of the present invention, the controllability adjusting mechanism includes a floor lifting/lowering mechanism adapted to selectively lift and lower a movable floor unit located under the driver's feet; and the control unit is operable to move the seat cushion of the driver seat in the longitudinal direction according to the input signal through the seat slide switch, while adjusting a vertical position and an inclination angle of the seat cushion of the driver seat in correlation with the adjusted longitudinal position of the driver seat, and determine a vertical position of the movable floor unit based on the adjusted vertical position and inclination angle of the seat cushion so as to output a control signal corresponding to the determined vertical position to the floor lifting/lowering mechanism.

According to this feature, in the driving posture adjusting apparatus comprising the controllability adjusting mechanism comprised of the floor lifting/lowering mechanism adapted to lift/lower the movable floor unit located under feet of a driver, the vertical position of the movable floor unit is set up based on the vertical position and inclination angle of the seat cushion of the driver seat set based on an input signal through the seat slide switch. Then, a control signal corresponding to the determined vertical position of the movable floor unit is output from the control unit to the floor lifting/lowering mechanism to selectively displace the movable floor unit upwardly and downwardly. This provides an advantages of being able to properly ensure a seated posture and operational controllability relative to the operation section, even if a body size of a driver varies, and actuate only the movable floor unit 6 according to a switch operation of a driver to adjust operational controllability relative to the operation section according to driver's preference or the like.

## Claims

1. A driving posture adjusting apparatus for a vehicle, including: a seat-position adjusting mechanism (2) adapted to move a seat cushion (1a) of a driver seat (1) in a longitudinal direction of a vehicle body so as to adjust a longitudinal position of said driver seat (1); a seated-posture adjusting mechanism (3) adapted to adjust a seated posture of a driver seated in said driver seat (1); and a controllability adjusting mechanism (7) adapted to adjust controllability for an operation section (4) to be operated by the driver, said driving-posture adjusting apparatus being **characterized by** comprising:
a seat slide switch (91) adapted to issue an instruction for actuating said seat-position adjusting mechanism (2) to move said seat cushion (1a) of said driver seat (1) in the longitudinal direction; and
control unit (95) operable to actuate said seated-posture adjusting mechanism (3) and said controllability adjusting mechanism (7), in correlation with the longitudinal position of said driver seat (1) adjusted according to an input signal through said seat slide switch (91), so as to obtain a driving posture corresponding to a predetermined recommended position.

2. The driving posture adjusting apparatus as defined in claim 1, wherein said seat slide switch (91) is adapted to allow a value of the driver's body height to be input therethrough as said input signal so as to cause said seat cushion (1a) of said driver seat (1) to be moved in the longitudinal direction according to said input value of driver's body height, and wherein said driving posture adjusting apparatus further comprises display unit (94) provided in or in a vicinity of said seat slide switch (91) to display said input value of driver's body height.

3. The driving posture adjusting apparatus as defined in claim 1 or 2, further comprising a vertical-position adjusting switch (93) adapted to issue an instruction for actuating said seated-posture adjusting mechanism (3) to selectively displace said seat cushion (1a) of said driver seat (1) upwardly and downwardly.

4. The driving posture adjusting apparatus as defined in claim 3, further comprising a reset switch (103) adapted to issue an instruction for resuming said control operation of adjusting the driving posture based on said recommended position.

5. The driving posture adjusting apparatus as defined in any one of claims 1 to 4, wherein:
said controllability adjusting mechanism (7) includes a floor lifting/lowering mechanism (7) adapted to selectively lift and lower a movable floor unit (6) located under the driver's feet; and
said control unit (95) is operable to move said seat cushion (1a) of said driver seat (1) in the longitudinal direction according to said input signal through said seat slide switch (91), while adjusting a vertical position and an inclination angle of said seat cushion (1a) of said driver seat (1) in correlation with said adjusted longitudinal position of said driver seat (1), and determine a vertical position of said movable floor unit (6) based on said adjusted vertical position and inclination angle of said seat cushion (1a) so as to output a control signal corresponding to said determined vertical position to said floor lifting/lowering mechanism (7).
